# EUROPÄISCHE PATENTSCHRIFT

(11) **EP 1 924 481 B1**
(45) Veröffentlichungstag und Bekanntmachung des Hinweises auf die Patenterteilung: **22.07.2009**
(21) Anmeldenummer: 07802003.9
(22) Anmeldetag: 30.08.2007
(51) Int. Cl.: B62D 1/04

(54) **LENKRAD FÜR EIN FAHRZEUG UND VERFAHREN ZU DESSEN HERSTELLUNG**
STEERING WHEEL FOR A VEHICLE AND METHOD FOR PRODUCING THE SAME
VOLANT DE DIRECTION POUR VÉHICULE ET PROCÉDÉ DE PRODUCTION DE CE VOLANT

(30) Priorität: 30.08.2006 DE 102006041386
(43) Veröffentlichungstag der Anmeldung: 28.05.2008
(73) Patentinhaber: Takata-Petri AG, 63743 Aschaffenburg (DE)
(72) Erfinder: GRIKSCHAT, Martin, 25335 Elmshorn (DE); KEMPF, Bernhard, 63839 Kleinwallstadt (DE); MÜLLER, Norbert, 63743 Aschaffenburg (DE)
(74) Vertreter: Baumgärtel, Gunnar
(86) Internationale Anmeldenummer: PCT/EP2007/007582
(87) Internationale Veröffentlichungsnummer: WO 2008/025546

(56) Entgegenhaltungen:
- EP-A- 0 255 171
- EP-A- 1 072 496
- WO-A-98/34826
- DE-U- 7 531 072

## Beschreibung

Die vorliegende Erfindung betrifft ein Verfahren zur Herstellung eines Lenkrads für ein Fahrzeug nach dem Oberbegriff des Anspruchs 1 sowie ein Lenkrad für ein Fahrzeug nach dem Oberbegriff des Anspruchs 15.

Die aus dem Stand der Technik bekannten Lenkräder bestehen zum überwiegenden Teil aus zwei Komponenten, einem Lenkradskelett und einer Lenkradummantelung. Das Lenkradskelett dient als tragendes Bauteil zur Aufnahme der Lenkkräfte und zur Abstützung im Crash-Fall. Standardmäßig werden Lenkradskelette aus Metallen, insbesondere aus Nichteisen-Legierungen gefertigt. Bekannt sind auch Lenkradskelette aus Stahl oder Stahl-Nichteisen-Kombinationen.

Die Lenkradummantelung als designgebendes Bauteil dient zur Form- und Oberflächengestaltung des Lenkrads sowie zur Bereitstellung der gewünschten haptischen Eigenschaften des Lenkrads. Standardmäßig wird als Lenkradummantelung ein Polyurethan-Integralschaumsystem verwendet. Die beiden Verfahren zur Herstellung des Lenkradskeletts und der Lenkradummantelung sind sehr unterschiedlich und beeinflussen sich gegenseitig negativ, weshalb die Produktion der Lenkräder des Standes der Technik räumlich in die Herstellung des Lenkradskeletts und die Anbringung der Lenkradummantelung getrennt wird. Das führt zu Zusatzkosten für Markierung, Transport, Eingangsprüfung und eventuell zusätzlich notwendiger Reinigung des Lenkradskeletts vor Anbringung der Lenkradummantelung.

Aus der DE 75 31 072 U ist bereits ein Lenkrad bekannt, das zu großen Teilen aus Kunststoff besteht. Dieses Lenkrad zeichnet sich insbesondere durch einen hochkompakten Lenkradkranz und eine ebenso kompakte Radnabe aus, was zu einem hohen Eigengewicht des Lenkrads führt. Die kompakte Radnabe dieses Lenkrads stellt keinen Nabenkörper mit einem hohlraumartigen Innenbereich dar.

Aus der DE 41 08 973 A1 ist ein Lenkrad aus Kunststoff bekannt, das mittels eines aufwändigen Herstellungsverfahrens hergestellt wird. So wird das Lenkradskelett gemäß dieser Druckschrift zunächst gespritzt, um anschließend pressgereckt zu werden. Durch dieses Pressrecken und der damit verbundenen Ausrichtung der Kunststoffmoleküle wird eine erhöhte Festigkeit des Lenkrads erreicht.

Aus der FR 2 620 996 A1 ist ein Kunststofflenkrad bekannt, das eine kompakte, metallische Radnabe aufweist. Die Kunststoffteile dieses Lenkrads werden mittels eines Pressverfahrens hergestellt.

Aus der EP 0 255 171 A1 ist ein Lenkrad bekannt, dessen Kranz sowie dessen aus einem thermoplastischen Kunststoff bestehende Nabe und Speichen mit einer Schicht eines verformbaren Kunststoffes ummantelt sind. Der Lenkradkranz besteht dabei aus Stahl, Leichtmetall oder aus gewickelten Endlosglasfasern, die in Kunststoff eingebettet sind. Das Lenkrad weist keine Verstärkungsstrukturen in einem Innenbereich eines Nabenkörpers auf.

Aus der WO 98/34826 A1 ist ein Lenkrad bekannt, dessen Nabe, Nabenkörper und mindestens eine Speiche einstückig aus einem Material wie beispielsweise Aluminium oder Stahl hergestellt sind. Verstärkungsstrukturen in einem Innenbereich des Nabenkörpers sind nicht vorgesehen.

Der vorliegenden Erfindung liegt die Aufgabe zugrunde, ein einfaches Verfahren zur Herstellung eines weitgehend aus Kunststoff bestehenden Lenkrads sowie ein mit einem solchen Verfahren herstellbares Lenkrad bereitzustellen.

Diese Aufgabe wird mit einem Verfahren mit den Merkmalen des Anspruchs 1 gelöst. Ein solches Verfahren zeichnet sich dadurch aus, dass zunächst ein Lenkradskelett, bestehend aus einem Nabenkörper, einem Lenkradkranz und mindestens einer Speiche, hergestellt wird. Dazu wird zunächst ein Nabeneinsatz bereitgestellt und anschließend eine Kunststoffmatrix um diesen Nabeneinsatz spritzgegossen. Auf diese Weise wird aus dem Nabeneinsatz ein Nabenkörper gebildet. Ferner werden aus der gleichen Kunststoffmatrix durch Spritzgießen und/oder Gasinnendruck- bzw. Wasserinnendruck-Spritzgießen die mindestens eine Speiche und der Lenkradkranz gebildet. Die Schritte des Spritzgießens der Kunststoffmatrix um den Nabeneinsatz sowie des Spritzgießens und/oder Gasinnendruck- bzw. Wasserinnendruck-Spritzgießen der mindestens einen Speiche und des Lenkradkranzes werden vorzugsweise gleichzeitig in einem Arbeitsschritt ausgeführt. Das heißt, es ist nach dem Bereitstellen eines Nabeneinsatzes nur ein weiterer Arbeitsschritt notwendig, um ein Lenkradskelett zu bilden. Dabei ist es denkbar und vorgesehen, dass die mindestens eine Speiche und der Lenkradkranz beide mit derselben methodischen Variante (beispielsweise Spritzgießen) oder mit jeweils unterschiedlichen methodischen Varianten (beispielsweise Spritzgießen der mindestens einen Speiche und Gasinnendruck-Spritzgießen des Lenkradkranzes) hergestellt werden. Anschließend wird das Lenkradskelett zumindest teilweise mit einem Überzug überzogen. Dies erfolgt insbesondere in den Bereichen des Lenkradkranzes und der mindestens einen Speiche.

Der mittels des Verfahrens erhaltene Nabenkörper weist eine einen Innenbereich ausbildende, hohlraumartige Form auf. Diese Form kann auch als topfförmig bezeichnet werden. Der Innenbereich definiert eine Aufnahme. Damit eignet sich der Nabenkörper zur Aufnahme weiterer Kraftfahrzeugkomponenten (beispielsweise eines Airbagmoduls). Zur besseren Stabilisierung des Nabenkörpers weist er zu seinem Innenbereich hin gewandte Verstärkungsstrukturen auf, die vorzugsweise von außen (vom Fahrzeuginnenraum aus) nicht sichtbar sind.

Wird der Lenkradkranz mittels Gasinnendruck- oder Wasserinnendruck-Spritzgießen hergestellt, entsteht ein geschlossenes Hohlprofil ohne Verrippung im Lenkradkranzbereich. Die Stabilität des Lenkradkranzes wird in diesem Fall durch die Stärke der Lenkradkranzwandung eingestellt. Bei diesen Verfahren wird das Gas bzw. das Wasser in den zu formenden Kunststoff eingebracht.

Optional wird der Nabenkörper, der die Funktionen eines Bodycovers übernehmen kann und dann ohne weitere Verkleidung direkt im Innenraum eines Fahrzeugs sichtbar ist (die Außenfläche des Nabenkörpers bildet dabei unmittelbar einen Teil der Außenkontur des Lenkrads), vorzugsweise vor dem zumindest teilweisen Überziehen des Lenkradskeletts mit einem Überzug lackiert.

Ebenso wird bevorzugt vor dem zumindest teilweisen Überziehen des Lenkradskeletts mit einem Überzug und vorzugsweise nach dem evtl. durchgeführten Lackieren des Nabenkörpers bei Bedarf eine Schicht aus einem elastischen Material auf das Lenkradskelett aufgebracht werden. Ob eine solche Schicht aufgebracht wird oder nicht, ist je nach Art des Überzugs zu entscheiden.

Das erfindungsgemäße Verfahren wird vorzugsweise derart ausgeführt, dass der gesamte Lenkradbauraum zum Erreichen einer Stabilität des Lenkrads und zur Gewährleistung einer Kraftübertragung auf und durch das Lenkrad genutzt wird. Dies wird unter anderem dadurch erreicht, dass die einzelnen Speichen des Lenkrads durch die integrierte Anspritzung an den Nabenkörper in einen Verbund gebracht werden. Dadurch entsteht ein Kunststoffbauteil, das die Kräfte gleichmäßig aufnimmt und dadurch die Einzellasten auf die Speichen reduziert. Ferner kann der Nabenkörper so ausgestaltet sein, dass er direkt in der gewünschten Außengeometrie spritzgegossen wird. Eine zusätzliche Verkleidung entfällt in diesem Fall. Der Nabenkörper übernimmt in diesem Fall auch die Funktion eines Backcovers.

Um ein gutes Spritzgießen der Kunststoffmatrix zu ermöglichen, weist die Kunststoffmatrix vorzugsweise mindestens einen thermoplastischen Kunststoff auf.

Als thermoplastischer Kunststoff kommen insbesondere Polypropylen, Polybutylenterephthalat oder ein Polyamid in Betracht, wobei auch Mischungen dieser Kunststoffe denkbar sind. Polyamide haben dabei den Vorteil, dass sie höhere Festigkeiten aufweisen.

Um die Festigkeit der Kunststoffmatrix insgesamt zu erhöhen, weist sie vorzugsweise einen Anteil von ca. 5 bis ca. 80%, insbesondere einen Anteil von ca. 10 bis ca. 70% und ganz besonders einen Anteil von ca. 20 bis ca. 60% eines Fasermaterials auf.

Als Fasern des Fasermaterials kommen vorzugsweise Carbonfasern, Metallfasern, Fasern organischer Produkte und/oder Glasfasern zur Anwendung. Als Glasfasern können dabei sowohl Kurzglasfasern, Langglasfasern und Endlosglasfasern verwendet werden. Beim Einsatz von Kurzglasfasem werden besonders Schlagzellkunststoffe verwendet, um den Festigkeitsnachteil der kürzeren Glasfaser auszugleichen. Kurzglasfasern haben eine Länge von ca. 0,1 bis ca. 0,6 mm, Langglasfasern haben eine Länge von ca. 0,6 bis ca. 100 mm, und Endlosglasfasern haben eine Länge von größer als ca. 100 mm.

Um die vorteilhaften stabilisierenden Eigenschaften der Glasfasern nutzen zu können, weisen die Glasfasern vorzugsweise einen Durchmesser von 1 bis 60 µm, insbesondere einen Durchmesser von 3 bis 40 µm und ganz besonders einen Durchmesser von 5 bis 20 µm auf.

Wird zum Aufschmelzen der faserverstärkten Kunststoffmatrix eine herkömmliche Plastifizierungseinheit einer Spritzgussmaschine eingesetzt, bei der die Kunststoffmatrix mit ihrer Faserverstärkung zusammen aufgeschmolzen wird, wird vorzugsweise besonders darauf geachtet, dass die faserverstärkte Kunststoffmatrix schonend aufgeschmolzen wird. Nur so ist es möglich, die Glasfasern in einer schonenden Art durch die Förderschnecke der Schmelzgussmaschine, den plastischen Bereich und den beheizten Einspritzkanal in die Spritzgussform zu überführen. Nur durch eine solch schonende Behandlung ist es jedoch möglich, insbesondere die langglasfaserverstärkten Kunststoffmatrices derart in die Spritzgussform einzubringen, dass im fertigen Lenkradskelett vorzugsweise mindestens 50 % der Glasfasern eine Länge von mindestens ca. 1 mm, insbesondere eine Länge von ca. 1 bis ca. 20 mm und ganz besonders eine Länge von ca. 1 bis ca. 5 mm aufweisen. Genau eine solche Länge führt aber zu den besten Festigkeitsergebnissen des Lenkradskeletts.

Trägt man die Festigkeit einer Kunststoffmatrix aus einem thermoplastischen Polymer und einem Fasermaterial in Abhängigkeit von der eingesetzten Faserlänge auf, so kann man erkennen, dass ab einer Faserlänge von rund 1 mm eine deutliche Zunahme der Festigkeit erreicht wird, die mit zunehmender Faserlänge zwar ansteigt, sich dieser Anstieg in der Festigkeit aber ab einer Faserlänge von ca. 3 mm deutlich verflacht. Der durch Fasern mit einer Faserlänge von mehr als 5 mm erreichte Zuwachs an Festigkeit der Kunststoffmatrix ist - gemessen an dem Aufwand, der betrieben werden muss, um eine solche Faserlänge bei mechanischer Beanspruchung der faserverstärkten Kunststoffmatrix noch aufrecht zu erhalten - nicht mehr so vorteilhaft nutzbar wie der Festigkeitsanstieg im Faserlängenbereich von ca. 1 bis ca. 5 mm.

Um das Fasermaterial in der Kunststoffmatrix so wenig wie möglich zu degradieren, wird zum Spritzgießen vorzugsweise eine Extrusionsvorrichtung verwendet, die mindestens eine Zuführvorrichtung zum Zuführen der Kunststoffmatrix und/oder eines Kunststoffmatrixanteils und eine Förderschnecke zum Fördern der Kunststoffmatrix und/oder des Kunststoffmatrixanteils aufweist, deren Bereiche, die von der zu schmelzenden Kunststoffmatrix und/oder von der geschmolzenen Kunststoffmatrix durchströmt werden, möglichst große Querschnitte aufweisen. Auf diese Art und Weise lassen sich auf die faserverstärkte Kunststoffmatrix einwirkende Scherkräfte minimieren. Auch ist es vorteilhaft, Vibratoren zur Vermeidung von Stauungen der zu schmelzenden Kunststoffmatrix in der Förderschnecke bzw. in der Zuführvorrichtung der Extrusionsvorrichtung einzusetzen.

Um für eine besonders schonende Behandlung des Fasermaterials zu sorgen, wird das Verfahren vorzugsweise derart durchgeführt, dass ein faserfreier Kunststoffmatrixanteil und das Fasermaterial getrennt voneinander in die Extrusionsvorrichtung eingebracht werden. Dabei wird zunächst der Kunststoffmatrixanteil aufgeschmolzen und das Fasermaterial in den bereits geschmolzenen Kunststoffmatrixanteil eingebracht. Bei dieser Variante des Verfahrens nimmt die Förderschnecke praktisch keinen Einfluss auf die Länge der Fasern. Die faserverstärkte Kunststoffmatrix wird dann nur noch durch den Einspritzzylinder und die Scherung im Anguss und im Formkörper behindert. Bei einer getrennten Zuführung des Fasermaterials und des faserfreien Kunststoffmatrixanteils werden, sofern Langfasern eingesetzt werden, regelmäßig mehr als 50 % Fasern mit einer Faserlänge von mehr als ca. 1 mm im spritzgegossenen Lenkradskelett beobachtet.

Da beim erfindungsgemäßen Verfahren sowohl das Lenkradskelett als auch der Überzug aus vergleichbaren Materialien, insbesondere beide aus Kunststoff bestehen, wird das Lenkradskelett vorzugsweise nicht gewaschen, bevor es mit dem Überzug überzogen wird. Die Einsparung dieses Verfahrensschritts ist mit einem Zeit- und Kostenvorteil verknüpft.

Das Überziehen des Lenkradskeletts mit dem Überzug erfolgt vorzugsweise durch Spritzgießen, durch ein Reaktionsverfahren (wie beispielsweise das reaction injection moulding (RIM-Verfahren)) und/oder durch ein manuell-mechanisches Verfahren wie beispielsweise ein Vernähen. Beim RIM-Verfahren werden mindestens zwei reaktive Flüssigkeiten unter Hochdruck vermischt und anschließend in ein Formwerkzeug eingetragen. Im Formwerkzeug härten sie zu einem fertigen Kunststoffbauteil aus, d. h. dass die chemische Reaktion des Aushärtens im Formwerkzeug stattfindet. Die Wahl des Verfahrens bestimmt sich nach dem einzusetzenden Material, für den Überzug. Dabei eignet sich das RIM-Verfahren insbesondere für Polyurethan-Schaum.

Vorzugsweise weist der Überzug einen Leder- und/oder Textilwerkstoff, einen Softlack und/oder einen gespritzten und/oder geschäumten Thermoplasten und/oder Duroplasten auf. So kann der Überzug beispielsweise aus einem Polyurethan-Schaum bestehen. Wird ein Leder- und/oder Textilwerkstoff als Überzug verwendet, bietet sich zum Vernähen des Überzugs auf dem Lenkradskelett ein manuell-mechanisches Verfahren an. Je nach Stärke des Werkstoffs des Überzugs kann es dabei vorteilhaft sein, eine polsternde Zwischenschicht zwischen das Lenkradskelett und den Überzug einzubringen.

Generell ist der Überzug deutlich weicher als der Skelettwerkstoff und erfüllt die Anforderungen an die Haptik nach Lastenheft.

Die der Erfindung zugrunde liegende Aufgabe wird auch durch ein Lenkrad für ein Fahrzeug, insbesondere für ein Kraftfahrzeug, mit den Merkmalen des Anspruchs 15 gelöst. Ein derartiges Lenkrad ist beispielsweise mit dem erfindungsgemäßen Verfahren herstellbar. Bevorzugte Ausgestaltungen des erfindungsgemäßen Verfahrens sind daher auch auf das erfindungsgemäße Lenkrad (und umgekehrt) anwendbar. Ein solches Lenkrad weist ein Lenkradskelett, das aus einem Lenkradkranz, einem Nabenkörper und mindestens einer Speiche besteht, auf, wobei der Nabenkörper mit dem Lenkradkranz durch die mindestens eine Speiche verbunden ist und wobei der Nabenkörper innerhalb des Lenkradkranzes angeordnet ist und der Lenkradkranz und die mindestens eine Speiche im Wesentlichen nur aus einer gegebenenfalls faserverstärkten Kunststoffmatrix bestehen.

Ein solches Lenkrad zeichnet sich dadurch aus, dass die mindestens eine Speiche Verstärkungsstrukturen aufweist. Ferner weist der Nabenkörper eine topfartige Form auf, die einen Innenbereich bildet, in dem Verstärkungsstrukturen angeordnet sind.

In einer bevorzugten Ausgestaltung der Erfindung weist der Lenkradkranz eine geschlossene Oberfläche auf, die einen Hohlraum umgibt. Der Hohlraum ist dabei frei von Verstärkungsstrukturen. Diese Ausgestaltung hat den Vorteil, dass ein für die Haptik gewünschter Überzug des Lenkradkranzes sehr dünn ausfallen kann, da keine "offenen" oder Verstärkungsstrukturen des Lenkrads aufweisende Bereiche des Lenkradkranzes überdeckt werden müssen. Vielmehr weist der Lenkradkranz bei dieser Alternative bereits ohne weiteren Überzug durch seine kranzförmige, im Querschnitt ringförmige, Form vorteilhafte Haptikeigenschaften auf.

In einer alternativen Ausgestaltung der Erfindung weist der Lenkradkranz - ähnlich wie die mindestens eine Speiche - Verstärkungsstrukturen auf, die den Lenkradkranz stabilisieren.

Die Verstärkungsstrukturen sind dabei bevorzugt ein Teil des Lenkradkranzes und/oder der mindestens einen Speiche und bestehen aus demselben Material wie der Lenkradkranz und/oder die mindestens eine Speiche. Vorzugsweise haben die Verstärkungsstrukturen eine rippenartige Gestalt

Um eine optimale Wirkung der Verstärkungsstrukturen im Lenkrad zu erreichen, sind sie vorzugsweise entlang der Lastpfade im Lenkrad angeordnet. Zur Bestimmung des Verlaufs der Lastpfade im Lenkrad bietet sich insbesondere eine computergestützte Berechnung an.

Zur besseren Stabilisierung (und im Allgemeinen entsprechend der Lastpfade im Lenkrad) sind die Verstärkungsstrukturen vorzugsweise einander zumindest teilweise kreuzend und/oder überkreuzend angeordnet. Als Überkreuzen wird dabei eine Orientierung der Verstärkungsstrukturen zueinander verstanden, bei der sich eine X-förmige Anordnung ergibt. Als Kreuzen wird eine Orientierung der Verstärkungsstrukturen zueinander verstanden, bei der sich eine T-artige Anordnung ergibt. Das heißt, auch "Einmündungen" einer geraden Verstärkungsstruktur in eine gebogene Verstärkungsstruktur stellen eine Kreuzung im Sinne der vorliegenden Erfindung dar.

Vorzugsweise weisen der Lenkradkranz und/oder die mindestens eine Speiche eine Aufnahme auf, die aus einem ersten Seitenschenkel, einem zweiten Seitenschenkel, welcher dem ersten Seitenschenkel gegenüber liegt, und einem Mittelschenkel, der den ersten mit dem zweiten Seitenschenkel verbindet, gebildet wird.

Die Aufnahme des Lenkradkranzes und/oder der mindestens einen Speiche nimmt bevorzugt mindestens einen Teil der Verstärkungsstrukturen auf bzw. umgreift diese.

Damit die Verstärkungsstrukturen als konstruktive Strukturelemente des Lenkradskeletts dieses gut stabilisieren können, ist die Aufnahme des Lenkradkranzes und/oder der mindestens einen Speiche vorzugsweise mit einer geschlossenen Oberfläche ausgebildet. Das hat zudem den Vorteil, dass die konstruktiven Strukturelemente beim Blick auf die Außenfläche der geschlossenen Oberfläche nicht sichtbar sind, da sie bevorzugt auf der der Außenfläche der Oberfläche abgewandten Innenfläche der Oberfläche angeordnet sind. Die Innenfläche ist dabei die Fläche der Oberfläche, die zum eigentlichen Aufnahmebereich der Aufnahme, in dem die Verstärkungsstrukturen angeordnet sind, hin orientiert ist.

Vorzugsweise ist die Aufnahme des Lenkradkranzes und/oder der mindestens einen Speiche derart gestaltet, dass sie eine im Querschnitt U-artige Form aufweist. Die in der Vertikalen angeordneten Seitenschenkel des U stellen dabei Seitenbereiche bzw. Seitenschenkel der Aufnahme dar. Die die Seitenschenkel des U verbindende Grundfläche des U ist als Mittelschenkel vorzugsweise der Teil der Aufnahme, der beim Lenkrad nach oben, d. h. zur Blickrichtung des Fahrers hin orientiert ist.

So sind die Verstärkungsstrukturen im Bereich der mindestens einen Speiche vorzugsweise zumindest teilweise schräg von einem ersten Seitenschenkel der Aufnahme zu einem zweiten Seitenschenkel der Aufnahme der mindestens einen Speiche angeordnet. Eine solche zumindest teilweise schräge und sich kreuzende Anordnung der Verstärkungsstrukturen stabilisiert insbesondere die Seitenspeiche(n) eines Lenkrads angemessen.

In einer alternativen Ausgestaltung der Erfindung sind die Verstärkungsstrukturen im Bereich der mindestens einen Speiche vorzugsweise im Wesentlichen längs und quer zu den sich gegenüberliegenden Seitenbereichen bzw. Seitenschenkeln der Aufnahme der mindestens einen Speiche angeordnet. Diese von einem schrägen Verlauf der Verstärkungsstrukturen abweichende Anordnung bietet sich insbesondere bei einer oder mehreren Bauchspeiche(n) an, da sie die dort vorherrschenden Lastpfade gut abbildet.

Um den Lastpfaden im Lenkradkranz gerecht zu werden, sind die Verstärkungsstrukturen im Bereich des Lenkradkranzes vorzugsweise zumindest abschnittsweise parallel zu den Seitenschenkeln der Aufnahme des Lenkradkranzes und/oder quer zu den Seitenschenkeln der Aufnahme des Lenkradkranzes und/oder schräg vom ersten Seitenschenkel zum gegenüberliegenden zweiten Seitenschenkel der Aufnahme des Lenkradkranzes angeordnet. Dabei ist berücksichtigt, dass sich die Lastpfade im Lenkradkranz nicht homogen über den gesamten Lenkradkranz verteilen, sondern aufgrund der unterschiedlichen Beanspruchung der einzelnen Abschnitte des Lenkradkranzes während eines Lenk- bzw. Fahrprozesses differieren.

Um für eine erhöhte Stabilität des Nabenkörpers und einer sicheren Kraftübertragung vom Lenkrad auf eine Lenkstange des Kraftrahzeugs zu sorgen, weist der Nabenkörper vorzugsweise einen Nabeneinsatz auf, der zumindest teilweise in die Kunststoffmatrix eingebettet ist.

Stabilitätserhöhende Eigenschaften dieser Art kommen dem Nabeneinsatz insbesondere dann zu, wenn er mindestens ein Metall aufweist. Vorzugsweise besteht der Nabeneinsatz vollständig aus Metall, er kann aber auch aus einem Kunststoff bestehen, wobei dann der die Lenkstange des Fahrzeugs aufnehmende Bereich des Nabeneinsatzes vorzugsweise aus Metall gefertigt und in die Kunststoffbereiche des Nabeneinsatzes eingebettet ist.

Zur besseren Einbettung des Nabeneinsatzes in die Kunststoffmatrix und zur besseren Kraftübertragung weist der Nabeneinsatz vorzugsweise Aussparungen auf, so dass er weniger als die gesamte Grundfläche des Nabenkörpers ausfüllt. Diese Aussparungen resultieren in einer Ausgestaltung des Nabeneinsatzes, die sich durch mehrere hervorstehende, flügelähnliche Bereiche des Nabeneinsatzes auszeichnet.

Damit der Nabeneinsatz die Lenkstange des Fahrzeugs aufnehmen kann, weist er bevorzugt mindestens einen ersten Durchbruch zur Aufnahme der Lenkstange auf, der nicht in die Kunststoffmatrix eingebettet ist.

Um diesen nicht eingebetteten ersten Durchbruch zu stabilisieren, sind die Verstärkungsstrukturen des Nabenkörpers vorzugsweise zumindest teilweise ringförmig um den ersten Durchbruch angeordnet. Sie erstrecken sich darüber hinaus vorzugsweise zumindest teilweise axial auf den ersten Durchbruch zu. Sind sowohl ringförmige als auch axiale Verstärkungsstrukturen vorgesehen, kreuzen sich diese Verstärkungsstrukturen. Sich kreuzende Verstärkungsstrukturen im Sinne der vorliegenden Erfindung sind auch solche Strukturen, die nicht vollständig übereinander hinweglaufen, sondern nur eine T-artige Kreuzungsstruktur ausbilden.

Die Verstärkungsstrukturen an den Seitenflächen des Nabenkörpers sind vorzugsweise im Wesentlichen in der Längserstreckungsrichtung der in den ersten Durchbruch einzuführenden Lenkstange des Fahrzeugs angeordnet. Mittels dieser Anordnung wird eine sehr gute Stabilisierung des Nabenkörpers gewährleistet.

Zur Erhöhung der Festigkeit des Nabenkörpers weist der Nabeneinsatz vorzugsweise mindestens einen zweiten Durchbruch auf, der werkstoffschlüssig in die Kunststoffmatrix eingebettet ist. Bei Vorhandensein eines solchen zweiten Durchbruchs wird die werkstoffschlüssige Einbindung des Nabeneinsatzes in den Kunststoff erhöht. Gleichzeitig führt das Vorsehen eines solchen zweiten Durchbruchs zu einer Materialersparnis und damit zu einer Gewichtsreduktion auf Seiten des Nabeneinsatzes. Daher wird vorzugsweise mehr als ein zweiter Durchbruch vorgesehen.

Die Kunststoffmatrix überdeckt den Nabeneinsatz vollständig. Im Bereich der Aussparungen des Nabeneinsatzes sowie des ersten Durchbruchs und gegebenenfalls des zweiten Durchbruchs weist jedoch der Boden des Nabenkörpers auch nach Überziehen des Nabeneinsatzes mit der Kunststoffmatrix Durchbrüche auf. Zur Stabilisierung dieser Durchbrüche werden vorzugsweise um die Durchbrüche umlaufende Verstärkungsstrukturen vorgesehen.

Durch die sandwichartige Ausbildung der aus dem Nabeneinsatz und der diesen umgebenden Kunststoffmatrix bestehenden Nabenkörpergrundfläche wird die Festigkeit des Nabenkörpers und insbesondere der Nabenkörpergrundfläche um ein Vielfaches erhöht. Vorzugsweise beträgt das Verhältnis zwischen der Materialstärke des Nabeneinsatzes und der Materialstärke der Nabenkörpergrundfläche, die aus dem Nabeneinsatz und der diesen allseitig umgebenden Kunststoffmatrix gebildet wird, ca. 5:1 bis ca. 1:5. Ein Materialstärkenverhältnis von 1:2,5 wird dabei besonders bevorzugt. Mit einem solchen Verhältnis lassen sich die vorteilhaften Wirkungen der sandwichartigen Ausgestaltung der Nabenkörpergrundfläche besonders vorteilhaft nutzen.

Der Nabeneinsatz weist vorzugsweise eine deutlich geringere Dicke bzw. Höhe als der gesamte Nabenkörper auf. Das heißt, der Nabeneinsatz erstreckt sich vorzugsweise nicht über die gesamte Höhe des Nabenkörpers. So bildet der Nabeneinsatz insbesondere vorzugsweise nur einen Teil der Nabenkörpergrundfläche; ein anderer Teil wird von der den Nabeneinsatz umgebenden Kunststoffmatrix gebildet. Der über die Nabenkörpergrundfläche hinausragende Höhenanteil des Nabenkörpers ist vorzugsweise (insbesondere weitaus bzw. signifikant) größer als der Höhenanteil der Nabenkörpergrundfläche an der gesamten Höhe des Nabenkörpers. Die Höhe bzw. Dicke des Nabeneinsatzes, der Nabenkörpergrundfläche und des Nabenkörpers ist dabei jeweils die sich in Verlängerung der aufzunehmenden Lenkstange erstreckende Ausdehnung dieser Komponenten.

Der Nabeneinsatz weist vorzugsweise eine flache oder scheibenförmige Gestalt auf. Er kann im Rahmen dieser flachen Ausgestaltung verschiedene Formen annehmen und mit Ausnehmungen und/oder Aussparungen versehen sein. Im Bereich einer (zentralen) Öffnung des Nabeneinsatzes, die zur Aufnahme einer Lenkstange bestimmt ist, kann der Nabeneinsatz abweichend von der flächigen Gestaltung ausgebildet sein (beispielsweise durch eine buchsenartige oder rohrförmige Gestaltung in diesem Bereich), um eine bessere Führung und/oder eine besser geeignete Kraftübertragung vom Nabeneinsatz (bzw. des Nabenkörpers, dessen Teil der Nabeneinsatz ist) auf die Lenkstange zu ermöglichen. Der den zur Aufnahme der Lenkstange oder Lenkspindel bestimmten (zentralen) Bereich des Nabeneinsatzes umgebende (äußere) Bereich ist vorzugsweise in der Kunststoffmatrix verankert, um die Nabenkörpergrundfläche zu bilden.

Zur Erhöhung der Stabilität weist die Kunststoffmatrix, aus der das Lenkradskelett gefertigt ist, einen Anteil von rund 5 bis ca. 80 %, insbesondere von ca. 10 bis ca. 70 % und ganz besonders einen Anteil von ca. 20 bis ca. 60 % eines Fasermaterials auf.

Das Fasermaterial umfasst vorzugsweise Carbonfasern, Metallfasern, Fasern organischer Produkte und/oder Glasfasern. Insbesondere der Einsatz von Glasfasern hat sich als vorteilhaft für die Festigkeit des Lenkradskeletts herausgestellt. Es wird dazu auf die obigen Erläuterungen verwiesen.

Um eine besonders hohe Festigkeit des Lenkradskeletts zu erreichen, weisen vorzugsweise mindestens 50 % der Glasfasern in der Kunststoffmatrix des Lenkradskeletts eine Länge von mindestens ca. 1 mm, insbesondere eine Länge von ca. 1 bis ca. 20 mm und ganz besonders eine Länge von ca. 1 bis ca. 5 mm auf.

Um möglichst viel Bauraum des Lenkrads zur Erhöhung der Festigkeit des Lenkrads verwenden zu können, weist der Überzug, welcher nicht für die Festigkeit, sondern für die haptischen Eigenschaften des Lenkrads verantwortlich ist, eine möglichst geringe Dicke bzw. Stärke auf. So hat der Überzug vorzugsweise nur eine Stärke von ca. 1 bis ca. 5 mm, insbesondere eine Stärke von ca. 1 bis ca. 3 mm und ganz besonders eine Stärke von ca. 1 bis ca. 2 mm. Bei Anwendung der Skinfoamtechnologie ist beispielsweise eine Stärke von ca. 1,5 mm ausreichend, um die gewünschte Haptik des Lenkrads des Lenkrads zu erreichen.

Für die vorteilhaften haptischen Eigenschaften des Lenkrads ist der Überzug vorzugsweise aus einem Material gefertigt, das eine geringere Härte als das Material des Lenkradskeletts aufweist.

Ein solches Material kann ein Natur- oder ein Kunststoff sein. Vorzugsweise wird als Überzug ein Leder- und/oder Textilwerkstoff, ein Softlack und/oder ein gespritzter und/oder geschäumter Thermoplast und/oder Duroplast verwendet.

Für den Fall, dass der Überzug alleine noch nicht so weich bzw. elastisch ist, dass die gewünschten haptischen Eigenschaften des Lenkrads erfüllt sind, kann zwischen dem Lenkradskelett und dem Überzug vorzugsweise eine Schicht aus einem elastischen Material, insbesondere aus einem Weichschaumstoff, angeordnet sein. Durch eine Kombination einer solchen Schicht mit einem entsprechenden Überzug lassen sich eine Vielzahl von Lenkradgestaltungen verwirklichen.

Weitere Vorteile und Einzelheiten der Erfindung sollen anhand nachfolgender Zeichnungen näher dargestellt werden. Es zeigen:
- Fig. 1: eine schematische Darstellung eines Lenkrads, das mit einem erfindungsgemäßen Verfahren hergestellt wurde,
- Fig. 2A: eine erste beispielhafte Ausgestaltung eines Nabeneinsatzes zur Verwendung in einem erfindungsgemäßen Verfahren oder einem erfindungsgemäßen Lenkrad,
- Fig. 2B: eine zweite Ausgestaltung eines Nabeneinsatzes, geeignet zur Verwendung in einem erfindungsgemäßen Verfahren oder in einem erfindungsgemäßen Lenkrad,
- Fig. 3A: ein erstes Ausführungsbeispiel eines erfindungsgemäßen Lenkrads in Vorderansicht,
- Fig. 3B: eine Detaildarstellung des Nabenkörpers des Lenkrads aus der Figur 3A,
- Fig. 4A: das Lenkrad aus der Figur 3A in Rückansicht,
- Fig. 4B: eine Detaildarstellung einer Seitenspeiche aus dem in der Figur 4A dargestellten Lenkrad in Rückansicht,
- Fig. 5: ein zweites Ausführungsbeispiel eines erfindungsgemäßen Lenkrads in Vorderansicht,
- Fig. 6: das Lenkrad aus der Fig. 5 in Rückansicht,
- Fig. 7A: einen Querschnitt durch einen Lenkradkranz,
- Fig. 7B: einen Querschnitt durch eine Seitenspeiche und
- Fig. 7C: einen Querschnitt durch eine Bauchspeiche.

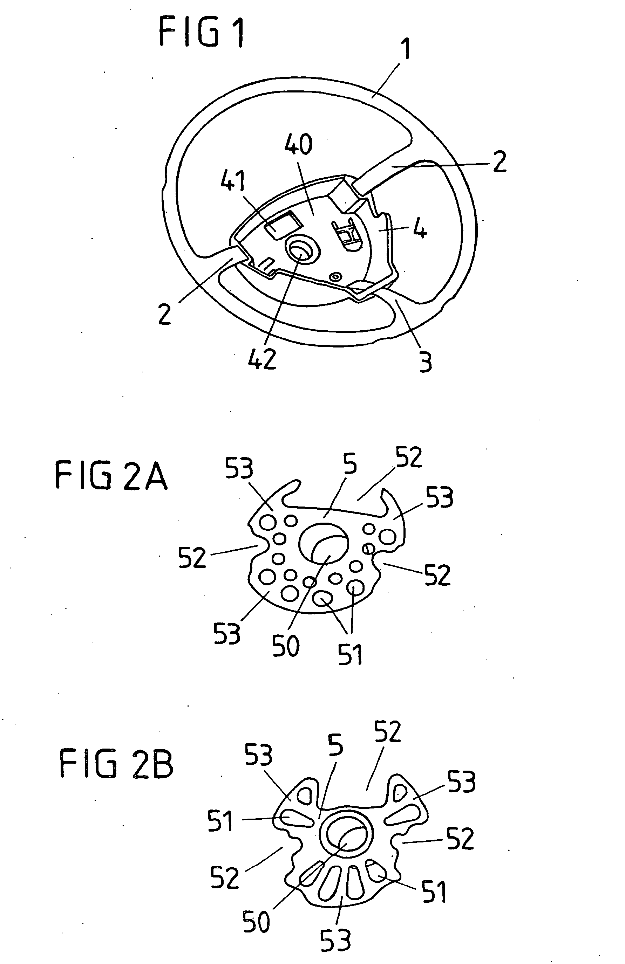

Die Figur 1 zeigt eine schematische Darstellung eines Lenkradskeletts aus einem Lenkradkranz 1, zwei Seitenspeichen 2, einer Bauchspeiche 3, und einem Nabenkörper 4, das nach einem erfindungsgemäßen Verfahren hergestellt wurde. Dabei wurden alle Teile des Lenkradskeletts in einem integrierten Spritzgussverfahren hergestellt. Die Seitenspeichen 2 und die Bauchspeiche 3 verbinden den Lenkradkranz 1 mit dem Nabenkörper 4. Der Nabenkörper 4 weist eine Nabenkörpergrundfläche 40 auf, in die unter anderem eine rechteckige Aussparung 41 und eine runde Aussparung 42 eingelassen sind. Der Durchbruch bzw. die Aussparung 42 dient zur Aufnahme einer Lenkstange des Fahrzeugs, in dem das Lenkrad angeordnet ist.

Der Nabenkörper 4 weist eine topfförmige Form auf, so dass weitere Fahrzeugelemente, wie beispielsweise ein Airbagmodul, in den Nabenkörper 4 eingesetzt werden können. Dazu kann ein solches Airbagmodul in gewohnter Weise in den Nabenkörper 4 eingerastet werden, wozu entsprechende Verrastungsvorrichtungen im Nabenkörper 4 bzw. an der Nabenkörpergrundfläche 40 vorgesehen sind. Soll ein Airbagmodul oder ein anderes Fahrzeugelement mit dem Nabenkörper 4 verschraubt werden, kann beim Einsatz selbstschneidender Schrauben auf das Vorschneiden von Gewinden verzichtet werden. Durch das Einführen von Schiebern in die mit einer Kunststoffmatrix auszufüllende Form können beim Spritzgießen direkt Hinterschnitte erzeugt werden, in die Module eingerastet werden können. Dies erleichtert den Fertigungsprozess gegenüber herkömmlichen Herstellungsverfahren erheblich.

Die Figuren 2A und 2B zeigen mögliche Ausgestaltungen von Buchsen, die als Nabeneinsatz 5 in einem erfindungsgemäßen oder erfingdungsgemäß hergestellten Lenkrad eingesetzt werden. Bei der Herstellung des Nabeneinsatzes 5 besteht hinsichtlich Geometrie und Werkstoff eine große Gestaltungsfreiheit. Gemeinsames Merkmal der verschiedenen denkbaren Nabenkörper 5 ist eine erste Öffnung 50, die an einem zentralen Bereich des Nabeneinsatzes 5 angeordnet ist und die zur Aufnahme der Lenkstange des Fahrzeugs dient, in den das Lenkrad eingesetzt werden soll. Beim späteren Spritzgießen von Kunststoff um den Nabeneinsatz 5 herum bleibt dieser erste Durchbruch 50 bestehen, das heißt, er wird nicht von Kunststoff überdeckt. Dadurch wird ein Durchbruch in der Nabenkörpergrundfläche gebildet.

Der Nabeneinsatz 5 weist darüber hinaus eine Vielzahl von zweiten Durchbrüchen 51 auf, von denen in den Figuren 2A und 2B nur zwei zweite Durchbrüche 51 beispielhaft mit dem entsprechenden Bezugszeichen versehen sind. Die zweiten Durchbrüche 51 dienen der Gewichtsreduktion des Nabeneinsatzes 5 und einem stabileren Verbund zwischen dem Nabeneinsatz 5 und einer an den Nabeneinsatz 5 anzubringenden Kunststoffummantelung.

Der Nabeneinsatz 5 weist ferner mehrere Aussparungen 52 an seinem radial äußeren Bereich auf. Durch diese Aussparungen 52 werden voneinander separierte, flügelartige Bereiche 53 des Nabeneinsatzes 5 gebildet. Durch die Ausbildung solcher flügelartigen Bereiche 53 wird die Kraftübertragung vom Lenkrad über den Nabeneinsatz 5 auf die in den ersten Durchbruch 50 des Nabeneinsatzes 5 einzuführende Lenkstange erhöht.

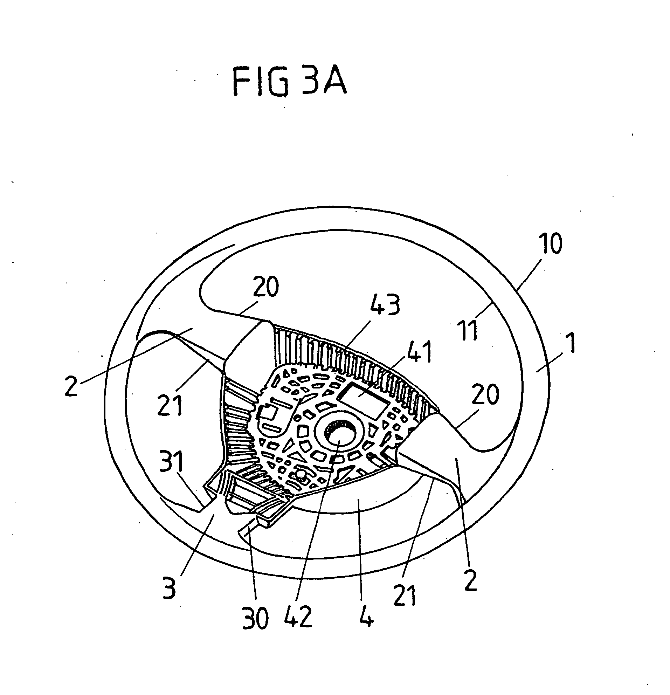

Die Figur 3A zeigt ein Ausführungsbeispiel eines erfindungsgemäßen Lenkrads, das nach einem erfindungsgemäßen Verfahren zur Herstellung eines Lenkrads herstellbar ist. Zur Bezeichnung der einzelnen Elemente dieses Lenkrads werden die bereits in der Figur 1 verwendeten Bezugszeichen verwendet.

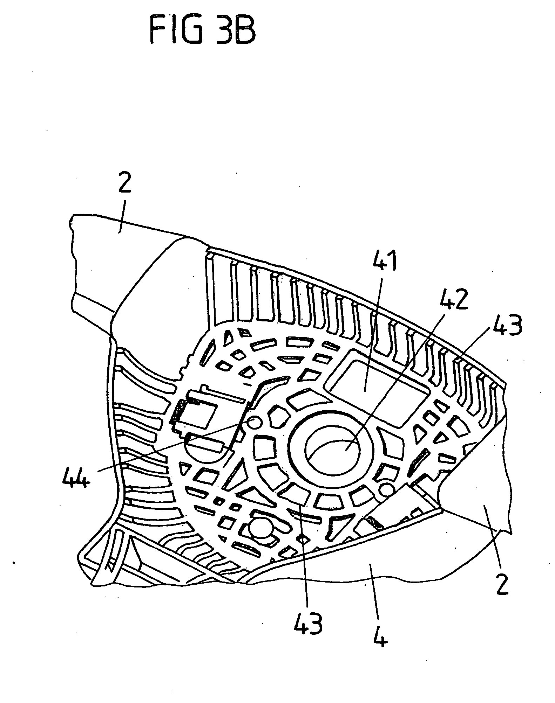

So weist auch das Lenkrad der Figur 3A einen Lenkradkranz 1 mit zwei Seitenspeichen 2 und einer Bauchspeiche 3 auf, die den Lenkradkranz 1 mit einem Nabenkörper 4 verbinden. Der Nabenkörper 4 ist innerhalb des Lenkradkranzes 1 angeordnet und weist eine runde Aussparung 42 zur Aufnahme der Lenkstange des Fahrzeugs, in dem das Lenkrad angeordnet ist, und eine eckige Aussparung 41 auf. Der Nabenkörper 4 ist in seinem topfförmigen Innenbereich mit einer Vielzahl von Verstärkungsstrukturen 43 versehen, die in der vergrößerten Abbildung der Figur 3B noch besser zu erkennen sind. Zur besseren Übersichtlichkeit sind dabei jeweils nur einige wenige Verstärkungsstrukturen stellvertretend für die übrigen mit dem entsprechenden Bezugszeichen versehen.

Im Bereich der Seitenwände des Nabenkörpers 4 sind die Verstärkungsstrukturen im Wesentlichen in der Richtung der Lenkstange, die in die runde Aussparung 42 in der Nabenkörpergrundfläche eingeführt wird, angeordnet. Im Bereich der Nabenkörpergrundfläche sind die Verstärkungsstrukturen 43 zum einen umlaufend um jede Aussparung 41 bzw. 42 bzw. 44 angeordnet. Zusätzlich zu diesen ringförmigen Verstärkungsstrukturen 43 sind weitere Rippen als Verstärkungsstrukturen 43 axial auf die runde Aussparung 42 zulaufend angeordnet. Darüber hinaus weist die Nabenkörpergrundfläche weitere Verstärkungsstrukturen 43 auf, die weder radial um eine Aussparung 41 bzw. 42 bzw. 44 noch axial auf eine solche Aussparung 41 bzw. 42 bzw. 44 zulaufend angeordnet sind. Damit ergibt sich ein komplexes Geflecht aus Verstärkungsstrukturen 43 im Innenbereich des Nabenkörpers 4, das dem Nabenköper 4 eine hohe Stabilität verleiht.

Vom Lenkradkranz 1 über die Speichen 2 und 3 auf den Nabenkörper 4 und von diesem auf die Lenkstange des Fahrzeugs eingelenkte Kräfte werden auf diese Weise wirkungsvoll und unter Wahrung einer hohen Stabilität des Lenkrads übertragen. Eine Anordnung der Verstärkungsstrukturen 43 zum Innenbereich des Nabenkörpers 4 hat darüber hinaus den Vorteil, dass im Sichtbereich des das Lenkrad bedienenden Fahrers die strukturelle Gestaltung des Lenkradskeletts nicht sichtbar ist. Damit wird gleichzeitig ausgeschlossen, dass etwaige Höhenunterschiede der Verstärkungsstrukturen 43 als Einfallstelle auf einer nachträglich angebrachten Ummantelung des Lenkradskeletts, insbesondere auf der Oberfläche des weicheren Mantelmaterials, sichtbar werden.

Durch die Anordnung der Verstärkungsstrukturen 43 und unter Berücksichtigung des Kunststoffmaterials zur Herstellung des Lenkradskeletts - insbesondere unter Berücksichtigung der Faserverstärkung des Kunststoffmaterials - erreicht ein erfindungsgemäßes Lenkrad die bekannt hohen Festigkeiten im täglichen Fahrbetrieb ebenso wie die Festigkeiten, die notwendig sind, um den durch falschen Gebrauch oder durch ein Unfallgeschehen entstehenden Belastungen standzuhalten. Durch eine alleinige Substitution des bislang verwendeten Metallmaterials für ein Lenkradskelett durch ein beliebiges Kunststoffmaterial können diese Festigkeiten kaum erreicht werden.

Im Bereich des Übergangs des Nabenkörpers 4 zu den Seitenspeichen 2 bzw. der Bauchspeiche 3 wird die Festigkeit des Nabenkörpers 4 durch quer zur Anordnung der Verstärkungsstrukturen 43 an den Seitenflächen des Nabenkörpers 4 angeordnete zusätzliche Verstärkungsstrukturen 43 erhöht.

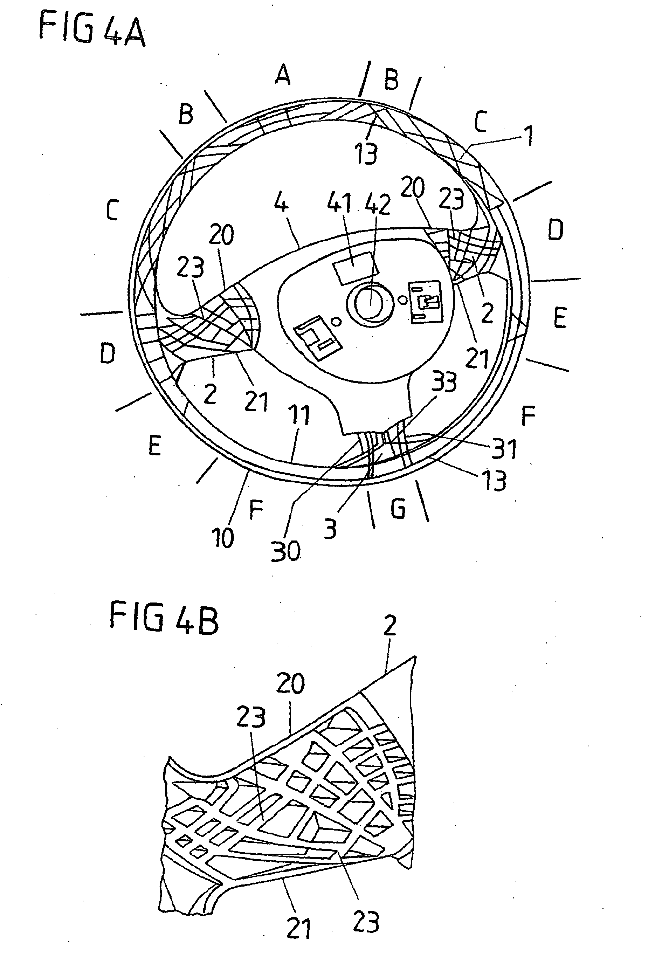

In der Figur 4A ist eine Rückansicht des Lenkrads der Figur 3A zu sehen. Zur Erläuterung der einzelnen Elemente des Lenkrads der Figur 4A wird auf die Beschreibung der Figur 3A verwiesen. Zusätzlich lässt sich die Gestaltung des Lenkradskeletts in dieser Darstellung noch besser erkennen.

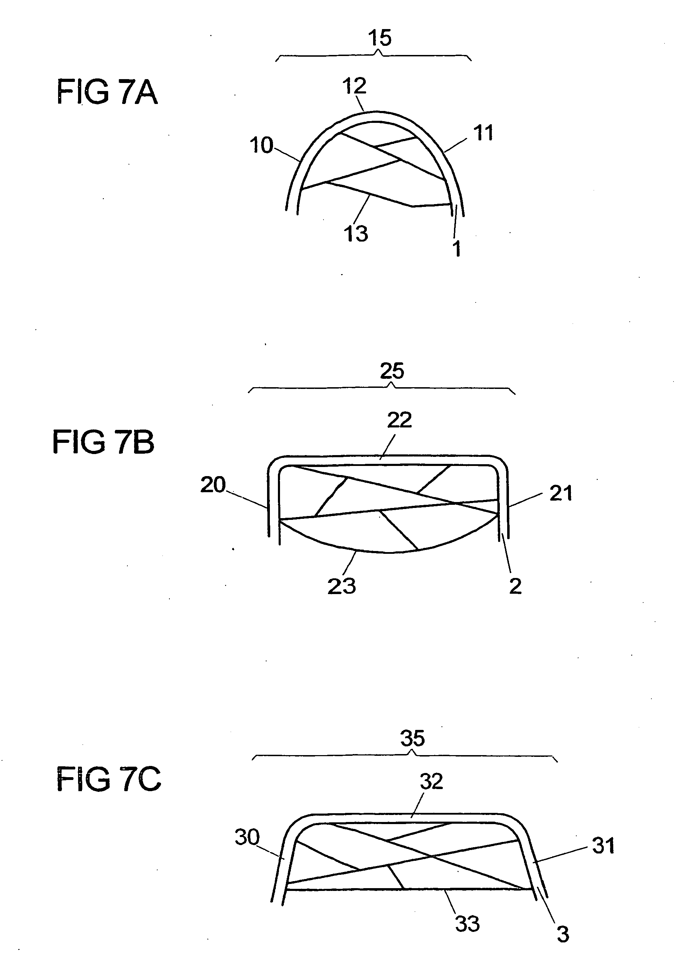

So weisen der Lenkradkranz 1, die Seitenspeichen 2 und die Bauchspeiche 3 jeweils eine im Querschnitt U-förmige Gestalt mit einem ersten Seitenschenkel 10, 20, 30 als erstem Seitenschenkel, einem zweiten Seitenschenkel 11, 21, 31 als einem zweiten Seitenschenkel und einem die beiden Seitenschenkel verbindenden Schenkel auf. Die U-förmige Gestalt ist dabei in dem vom U eingeschlossenen Bereich von Verstärkungsstrukturen 13, 23, 33 durchzogen. Denkt man sich diese Verstärkungsstrukturen 13, 23, 33 aus dem Querschnitt des Lenkradkranzes 1, der Seitenspeichen 2 und der Bauchspeiche 3 weg, bleibt eine reine U-Form übrig, die eine Aufnahme für die Verstärkungsstrukturen 13, 23, 33 bildet. Dies ist in den Figuren 7A bis 7C detailliert dargestellt.

Der die beiden Seitenschenkel verbindende Schenkel im Lenkrad der Figuren 3A und 4A nach oben, das heißt zur Fahrerseite hin, angeordnet, während die offene Seite der U-förmigen Gestalt des Lenkradkranzes 1, der Seitenspeichen 2 und der Bauchspeiche 3 nach unten angeordnet ist. Auf diese Art und Weise besitzt schon das Lenkradskelett eine geschlossene Oberfläche zum Fahrer hin, so dass konstruktive Elemente, wie beispielsweise die Verstärkungsstrukturen 13, 23, 33 nach oben hin nicht sichtbar sind. Durch die Kreuzverrippung der Verstärkungsstrukturen 13, 23, 33 wird gleichzeitig die notwendige Eigenresonanzüberschreitung des Lenkradkranzes 1 erzielt. Auch wird so verhindert, dass sich Einfallstellen in dem weichen Material der Ummantelung, die auf dem Lenkradskelett anzubringen ist, abzeichnen.

In der Darstellung der Figur 4A sind ferner die unterschiedlichen Anordnungen von Verstärkungsstrukturen 13 im Bereich des Lenkradkranzes 1, von Verstärkungsstrukturen 23 im Bereich der Seitenspeichen 2 und von Verstärkungsstrukturen 33 im Bereich der Bauchspeiche 3 gut zu erkennen. Von den Verstärkungsstrukturen 13, 23, 33 sind zur besseren Übersichtlichkeit jeweils nur einige wenige mit dem entsprechenden Bezugszeichen versehen.

So lässt sich der Lenkradkranz 1 in verschiedene Zonen A bis G unterteilen. In der im obersten Abschnitt des Lenkradkranzes 1 angeordneten Zone A sind die Verstärkungsstrukturen 13 insbesondere quer und längs der Schenkel des Lenkradkranzes 1 angeordnet.

In der sich rechts und links der Zone A anschließenden Zone B gehen die Verstärkungsstrukturen 13 in eine sich nur kaum überkreuzende schräge Anordnung von einem Schenkel 10 des Lenkradkranzes 1 zum anderen Schenkel 11 des Lenkradkranzes 1 über.

In der sich an die Zone B des Lenkradkranzes 1 nach unten anschließenden Zone C sind die Verstärkungsstrukturen 13 in einer sich deutlich überkreuzenden schrägen Anordnung von einem Seitenschenkel 10 des Lenkradkranzes 1 zum anderen Seitenschenkel 11 des Lenkradkranzes 1 angeordnet.

An die Zone C des Lenkradkranzes 1 schließt sich nach unten die Zone D an. In dieser Zone findet sich eine radiale Verstärkungsstruktur 13, die in etwa mittig zwischen den beiden Seitenschenkeln 10, 11 des Lenkradkranzes 1 angeordnet ist. Diese radiale Verstärkungsstruktur 13 wird durch von dem einen Seitenschenkel 10 des Lenkradkranzes 1 quer zum anderen Seitenschenkel 11 verlaufende Verstärkungsstrukturen 43 gekreuzt. Die Zone D spiegelt dabei den Bereich des Lenkradkranzes 1 wieder, in dem die Seitenspeichen 2 an dem Lenkradkranz 1 angebunden sind.

Unterhalb der Zone D schließt sich die Zone E an, in der die radiale Verstärkungsstruktur 13 der Zone D weiterläuft, aber von schräg von einem Seitenschenkel 10 des Lenkradkranzes 1 zum anderen Seitenschenkel 11 des Lenkradkranzes 1 verlaufenden Verstärkungsstrukturen 13 gekreuzt wird.

Weiter nach unten schließt sich an die Zone E die Zone F an, in der die radial verlaufende Verstärkungsstruktur 13 der Zonen D und E im Wesentlichen ohne Kreuzung weiterer Verstärkungsstrukturen 13 verläuft.

Im untersten Bereich des Lenkradkranzes 1, in dem die Bauchspeiche 3 mit dem Lenkradkranz 1 verbunden ist, ist schließlich die Zone G des Lenkradkranzes 1 angeordnet, in der die radiale Verstärkungsstruktur 13 aus den Zonen D, E und F weiterläuft und von Verstärkungsstrukturen 13, die in der Längserstreckungsrichtung der Bauchspeiche 3 verlaufen, gekreuzt wird.

In der Figur 4B ist eine vergrößerte Darstellung einer Seitenspeiche 2 des Lenkrads der Figur 4A ebenfalls in Rückansicht dargestellt. In dieser Darstellung sind die sich kreuzenden und schräg von einem Seitenschenkel 20 der Seitenspeiche 2 zum anderen Seitenschenkel 21 der Seitenspeiche verlaufenden Verstärkungsstrukturen 23 gut zu erkennen. Wiederum sind nur einige wenige Verstärkungsstrukturen 23 mit dem entsprechenden Bezugszeichen versehen. Je nach Anzahl und Geometrie der Seitenspeichen 2 und ihrer relativen Anordnung zum Lenkradkranz 1 können die Verstärkungsstrukturen 23 auch einen anderen Verlauf einnehmen, um die entsprechenden Lastpfade abzubilden.

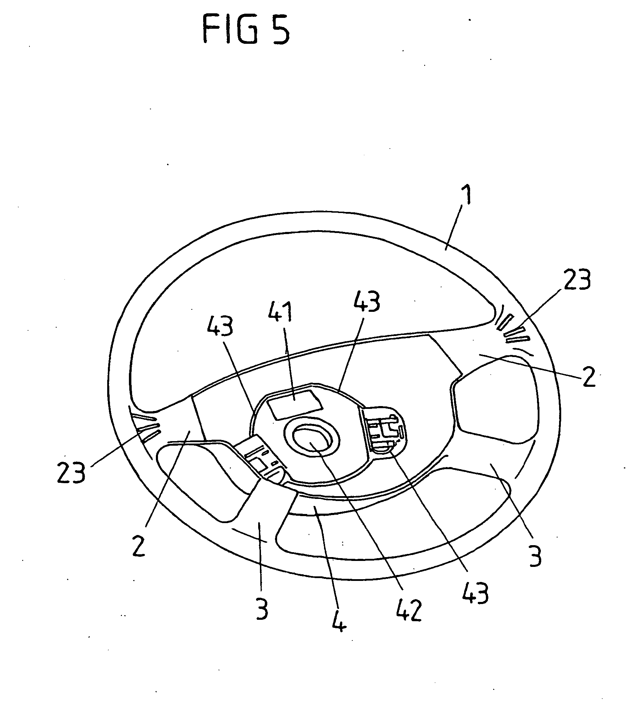

Die Figur 5 zeigt ein weiteres Ausführungsbeispiel eines erfindungsgemäßen Lenkrads, das wie das Lenkrad der Figur 3A einen Lenkradkranz 1 und zwei Seitenspeichen 2 sowie einen Nabenkörper 4 aufweist. Für die gleichen Elemente des Lenkrads werden die bereits aus den vorherigen Figurenbeschreibungen bekannten Bezugszeichen weiter verwendet. Im Unterschied zu dem in der Figur 3A gezeigten Ausführungsbeispiel weist das Lenkrad der Figur 5 jedoch zwei Bauchspeichen 3 auf. Dadurch ergeben sich im gesamten Lenkrad unterschiedliche Kraftverteilungspfade.

Durch die beiden Bauchspeichen 3 wird der Nabenkörperboden 4 derart stabilisiert, dass auf eine Anordnung von Verstärkungsstrukturen, die in der Längsrichtung der in eine runde Aussparung in der Nabenkörpergrundfläche 42 einzuführenden Lenkstange angeordnet sind, verzichtet werden kann. Auch kann in der Nabenkörpergrundfläche, in der neben der runden Aussparung 42 auch noch eine rechteckige Aussparung 41 angeordnet ist, auf eine Vielzahl von Verstärkungsstrukturen verzichtet werden, die im Ausführungsbeispiel der Figur 3A vorhanden sind. Einige Verstärkungsstrukturen 43, die sich teilweise kreuzen, indem sie T- bzw. Y-förmige Verbindungen untereinander aufweisen, sind zur Stabilisierung des Nabenkörpers 4 dennoch auf der Nabenkörpergrundfläche ausgebildet.

Sofern durch die Seitenspeichen 2 und die Bauchspeichen 3 keine ausreichende Stabilisierung des Nabenkörpers 4 erreicht werden kann, ist es auch möglich, bei einer derartigen vierspeichigen Lenkradausgestaltung parallel zur Längserstreckungsrichtung der in die runde Aussparung 42 einzuführenden Lenkstange angeordnete Verstärkungsstrukturen im Inneren des Nabenkörpers 4 vorzusehen. Dadurch kann eine etwaige Deformation des Nabenkörpers 4 wirkungsvoll vermieden werden.

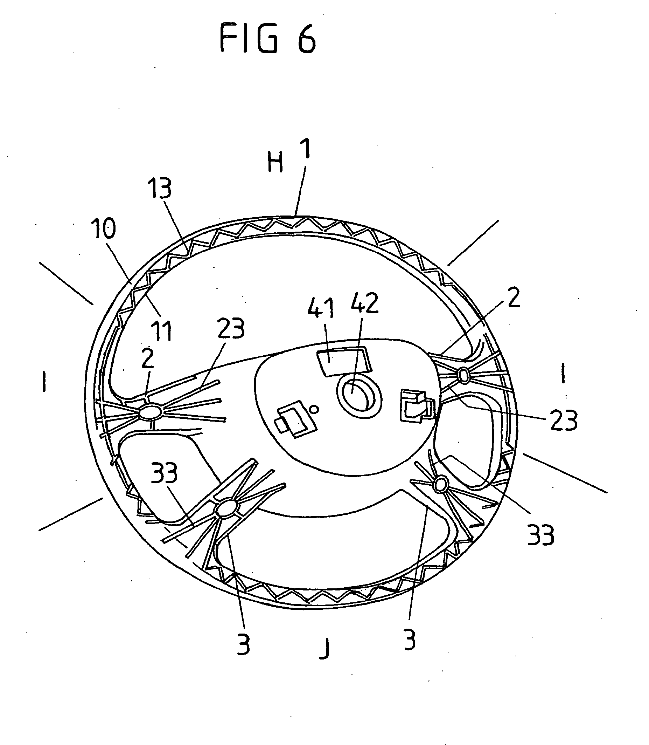

Am Übergang der Seitenspeichen 2 zum Lenkradkranz 1 sind Verstärkungsstrukturen 23 auf der Oberseite der Seitenspeichen 2 angeordnet, die zu einer wirksamen kraftübertragenden Verbindung zwischen den Seitenspeichen 2 und dem Lenkradkranz 1 beitragen. Der Lenkradkranz 1 selbst weist nach oben, d.h. zur Fahrerseite hin orientiert, eine geschlossene Oberfläche auf. Diese geschlossene Oberfläche dient zur Aufnahme von Verstärkungsstrukturen, die auf der Rückseite des Lenkradkranzes 1 angeordnet sind, wie aus der Figur 6 zu sehen ist. Gleiches gilt für die Ausgestaltung der Bauchspeichen 3. Lediglich die Seitenspeichen 2 weisen - wie bereits erwähnt - auch auf der dem Fahrer zugewandten Seite Verstärkungsstrukturen 23 auf. Der Großteil der Verstärkungsstrukturen 23 ist jedoch auch im Fall der Seitenspeichen 2 auf der Rückseite, d.h. der dem Fahrer abgewandten Seite des Lenkrads, angeordnet, wie im Folgenden bei der Beschreibung der Figur 6 näher dargelegt wird.

Die Figur 6 zeigt das in der Figur 5 dargestellte Lenkrad in Rückansicht. Gut zu erkennen sind die Verstärkungsstrukturen 13, 23, 33 des Lenkradkranzes 1, der Seitenspeichen 2 und der Bauchspeichen 3. Im Unterschied zu dem in den Figuren 3 und 4 dargestellten Ausführungsbeispiel eines erfindungsgemäßen Lenkrads sind die Verstärkungsstrukturen 13, 23, 33 des in den Figuren 5 und 6 dargestellten Ausführungsbeispiels eines erfindungsgemäßen Lenkrads sich zu einem geringeren Ausmaß überkreuzend angeordnet. Dies ist unter anderem darauf zurückzuführen, dass die Lastpfade im Lenkrad aufgrund der zusätzlichen Anordnung einer weiteren Bauchspeiche 3 anders verlaufen.

So sind die Verstärkungsstrukturen 23, 33 der Seitenspeichen 2 und der Bauchspeichen 3 radial auf eine zentral in den Seitenspeichen 2 bzw. den Bauchspeichen 3 angeordnete ringförmige Verstärkungsstruktur zulaufend angeordnet. Durch ihre Verbindung mit der ringförmig verlaufenden Verstärkungsstruktur üben sie so eine kreuzende Anordnung der Verstärkungsstrukturen 23, 33 aus. Darüber hinaus verlaufen die Verstärkungsstrukturen 23, 33 der Seitenspeichen 2 und der Bauchspeichen 3 in den Lenkradkranz 1 hinein und überkreuzen dort an den Verbindungsstellen der Seitenspeichen 2 mit dem Lenkradkranz 1 bzw. der Bauchspeichen 3 mit dem Lenkradkranz 1 die Verstärkungsstrukturen 13 des Lenkradkranzes 1.

Die Anordnung der Verstärkungsstruktur 13 im Lenkradkranz 1 lässt sich ähnlich wie bereits bei dem in der Figur 4A dargestellten Ausführungsbeispiel eines erfindungsgemäßen Lenkrads in verschiedene Zonen H bis J unterteilen. In der im oberen Bereich Lenkradkranzes 1 angeordneten Zone H verlaufen die Verstärkungsstrukturen 13 in einem zickzackförmigen Muster von einem ersten Seitenschenkel 10 der Aufnahme des Lenkradkranzes 1 zu einem zweiten Seitenschenkel 11 der Aufnahme des Lenkradkranzes 1 und zurück. Durch die Verbindung der Verstärkungsstrukturen 13 untereinander an entweder dem ersten oder dem zweiten Seitenschenkel, d.h. am Wendepunkt des Zickzackmusters, wird eine ähnliche Stabilisierung der Verstärkungsstrukturen 13 erreicht wie durch eine kreuzende oder überkreuzende Anordnung der Verstärkungsstrukturen 13.

Unterhalb der Zone H schließt sich beidseitig die Zone I an, in der die Verstärkungsstrukturen 13 im Wesentlichen mittig radial im Lenkradkranz verlaufen. Dabei werden sie von den Verstärkungsstrukturen 23, die aus den Seitenspeichen in den Lenkradkranz 1 hinein verlaufen, überkreuzt.

Die Figur 7A zeigt einen schematischen Querschnitt durch einen Teilbereich eines erfindungsgemäßen Lenkradkranzes 1 mit einem ersten Seitenschenkel 10, einem dem ersten Seitenschenkel 10 gegenüberliegenden zweiten Seitenschenkel 11 und einem Mittelschenkel 12, der den ersten Seitenschenkel 10 mit dem zweiten Seitenschenkel 11 verbindet. Der erste Seitenschenkel 10, der zweite Seitenschenkel 11 und der Mittelschenkel 12 bilden zusammen eine Aufnahme 15, die die Verstärkungsstrukturen 13 des Lenkradkranzes 1, welche sich teilweise kreuzen, aufnimmt. Dabei können die Verstärkungsstrukturen 13 auch teilweise aus der Aufnahme 15 herausragen (vgl. Fig. 7B). Der Querschnitt des Lenkradkranzes 1 weist die Form eines abgerundeten U auf.

Die Figur 7B zeigt einen schematischen Querschnitt durch einen Teilbereich einer erfindungsgemäßen Seitenspeiche 2 mit einem ersten Seitenschenkel 20, einem dem ersten Seitenschenkel 20 gegenüberliegenden zweiten Seitenschenkel 21 und einem Mittelschenkel 22, der den ersten Seitenschenkel 20 mit dem zweiten Seitenschenkel 21 verbindet. Der erste Seitenschenkel 20, der zweite Seitenschenkel 21 und der Mittelschenkel 22 bilden zusammen eine Aufnahme 25, die die Verstärkungsstrukturen 23 der Seitenspeiche 2, welche sich teilweise kreuzen und teilweise überkreuzen, aufnimmt. Ein teil der Verstärkungsstrukturen 23 ragt aus der Aufnahme heraus und bildet so den unteren Abschluss der Seitenspeiche 2. Der Querschnitt der Seitenspeiche 2 weist die Form eines kantigen U auf, wobei die die Seitenschenkel 20, 21 auch in einem anderen Winkel, als in der Figur 7B dargestellt, mit dem Mittelschenkel 22 verbunden sein könnten.

Die Figur 7C zeigt einen schematischen Querschnitt durch einen Teilbereich einer erfindungsgemäßen Bauchspeiche 3 mit einem ersten Seitenschenkel 30, einem dem ersten Seitenschenkel 30 gegenüberliegenden zweiten Seitenschenkel 31 und einem Mittelschenkel 32, der den ersten Seitenschenkel 30 mit dem zweiten Seitenschenkel 31 verbindet. Der erste Seitenschenkel 30, der zweite Seitenschenkel 31 und der Mittelschenkel 32 bilden zusammen eine Aufnahme 35, die die Verstärkungsstrukturen 33 der Bauchspeiche 3, welche sich teilweise kreuzen und teilweise überkreuzen, aufnimmt. Auch der Querschnitt der Bauchspeiche 3 weist die Form eines kantigen U auf, wobei die die Seitenschenkel 30, 31 auch in einem anderen Winkel, als in der Figur 7C dargestellt, mit dem Mittelschenkel 32 verbunden sein könnten.

### Bezugszeichenliste

- 1: Lenkradkranz
- 2: Seitenspeiche
- 3: Bauchspeiche
- 4: Nabenkörper
- 5: Nabeneinsatz
- 10: erster Seitenschenkel des Lenkradkranzes
- 11: zweiter Seitenschenkel des Lenkradkranzes
- 12: Mittelschenkel des Lenkradkranzes
- 13: Verstärkungsstrukturen
- 15: Aufnahme des Lenkradkranzes
- 20: erster Seitenschenkel der Seitenspeiche
- 21: zweiter Seitenschenkel der Seitenspeiche
- 22: Mittelschenkel der Seitenspeiche
- 23: Verstärkungsstrukturen
- 25: Aufnahme der Seitenspeiche
- 30: erster Seitenschenkel der Bauchspeiche
- 31: zweiter Seitenschenkel der Bauchspeiche
- 32: Mittelschenkel der Bauchspeiche
- 33: Verstärkungsstrukturen
- 35: Aufnahme der Bauchspeiche
- 40: Nabenkörpergrundfläche rechteckige Aussparung in der
- 41: Nabenkörpergrundfläche runde Aussparung in der
- 42: Nabenkörpergrundfläche weitere runde Aussparung in der
- 44: Nabenkörpergrundfläche
- 43: Verstärkungsstrukturen
- 50: erster Durchbruch
- 51: zweiter Durchbruch
- 52: Aussparung
- 53: flügelartiger Bereich
- A: Zone des Lenkradkranzes
- B: Zone des Lenkradkranzes
- C: Zone des Lenkradkranzes
- D: Zone des Lenkradkranzes
- E: Zone des Lenkradkranzes
- F: Zone des Lenkradkranzes
- G: Zone des Lenkradkranzes
- H: Zone des Lenkradkranzes
- I: Zone des Lenkradkranzes
- J: Zone des Lenkradkranzes

## Patentansprüche

1. Verfahren zur Herstellung eines Lenkrads für ein Fahrzeug, insbesondere für ein Kraftfahrzeug, mit den folgenden Schritten:
a) Herstellen eines Lenkradskeletts mit einem Nabenkörper (4), einem Lenkradkranz (1) und mindestens einer Speiche (2, 3) durch
aa) Bereitstellen eines Nabeneinsatzes (5),
ab) Spritzgießen einer Kunststoffmatrix um den Nabeneinsatz (5) zur Bildung des Nabenkörpers (4), wobei der Nabenkörper (4) eine einen Innenbereich ausbildende hohlraumartige Form aufweist und im Innenbereich des Nabenkörpers (4) Verstärkungsstrukturen (43) angeordnet sind,
ac) Spritzgießen und/oder Gasinnendruck- bzw. Wasserinnendruck-Spritzgießen der mindestens einen Speiche (2, 3) und des Lenkradkranzes (1) aus der Kunststoffmatrix, wobei die mindestens eine Speiche (2, 3) den Nabenkörper (4) mit dem Lenkradkranz (1) verbindet,
b) zumindest teilweises Überziehen des Lenkradskeletts mit einem Überzug.

2. Verfahren nach Anspruch 1, **dadurch gekennzeichnet, dass** der Nabenkörper (4) zwischen Schritt a) und Schritt b) lackiert wird.

3. Verfahren nach Anspruch 1 oder 2, **dadurch gekennzeichnet, dass** vor Schritt b) eine Schicht aus einem elastischen Material auf das Lenkradskelett aufgebracht wird.

4. Verfahren nach einem der vorhergehenden Ansprüche, **dadurch gekennzeichnet, dass** die Kunststoffmatrix mindestens einen thermoplastischen Kunststoff aufweist.

5. Verfahren nach einem der vorhergehenden Ansprüche, **dadurch gekennzeichnet, dass** der thermoplastische Kunststoff Polypropylen, Polybutylenterephthalat oder ein Polyamid ist.

6. Verfahren nach einem der vorhergehenden Ansprüche, **dadurch gekennzeichnet, dass** die Kunststoffmatrix einen Anteil von 5 bis 80 %, insbesondere 10 bis 70 %, besonders 20 bis 60 % eines Fasermaterials aufweist.

7. Verfahren nach Anspruch 6, **dadurch gekennzeichnet, dass** das Fasermaterial Carbonfasern, Metallfasern, Fasern organischer Produkte und/oder Glasfasern aufweist.

8. Verfahren nach Anspruch 7, **dadurch gekennzeichnet, dass** die Glasfasern einen Durchmesser von 1 bis 60 µm, insbesondere von 3 bis 40 µm, besonders von 5 bis 20 µm aufweisen.

9. Verfahren nach Anspruch 7 oder 8, **dadurch gekennzeichnet, dass** das Spritzgießen derart durchgeführt wird, dass mindestens 50 % der Glasfasern in der Kunststoffmatrix des Lenkradskeletts eine Länge von mindestens 1 mm, insbesondere von 1 bis 20 mm, ganz besonders von 1 bis 5 mm aufweisen.

10. Verfahren nach einem der vorhergehenden Ansprüche, **dadurch gekennzeichnet, dass** zum Spritzgießen eine Extrusionsvorrichtung verwendet wird, die mindestens eine Zuführvorrichtung zum Zuführen der Kunststoffmatrix und/oder eines Kunststoffmatrixanteils und eine Förderschnecke zum Fördern der Kunststoffmatrix und/oder des Kunststoffmatrixanteils aufweist, wobei die von der zu schmelzenden Kunststoffmatrix und/oder von der geschmolzenen Kunststoffmatrix durchströmte Bereiche Querschnitte aufweisen, die so groß gewählt sind, dass eine Degradation des Fasermaterials in der Kunststoffmatrix minimiert ist.

11. Verfahren nach Anspruch 10, **dadurch gekennzeichnet, dass** ein faserfreier Kunststoffmatrixanteil und das Fasermaterial getrennt voneinander der Extrusionsvorrichtung zugeführt werden, wobei das Fasermaterial in den bereits geschmolzenen faserfreien Kunststoffmatrixanteil eingebracht wird.

12. Verfahren nach einem der vorhergehenden Ansprüche, **dadurch gekennzeichnet, dass** das Lenkradskelett ohne Durchführung eines Waschschritts mit dem Überzug überzogen wird.

13. Verfahren nach einem der vorhergehenden Ansprüche, **dadurch gekennzeichnet, dass** das Überziehen des Lenkradskeletts mit dem Überzug durch Spritzgießen, durch ein Reaktionsverfahren und/oder durch ein manuell-mechanisches Verfahren erfolgt.

14. Verfahren nach einem der vorhergehenden Ansprüche, **dadurch gekennzeichnet, dass** der Überzug einen Leder- und/oder Textilwerkstoff, einen Softlack und/oder einen gespritzten und/oder geschäumten Thermoplasten und/oder Duroplasten aufweist.

15. Lenkrad für ein Fahrzeug, insbesondere für ein Kraftfahrzeug, mit einem Lenkradskelett, das einen Lenkradkranz (1), einen Nabenkörper (4) und mindestens eine Speiche (2, 3) aufweist, mittels der der Nabenkörper (4) mit dem Lenkradkranz (1) verbunden ist, wobei der Nabenkörper (4) innerhalb des Lenkradkranzes (1) angeordnet ist und der Lenkradkranz (1) und die mindestens eine Speiche (2, 3) im Wesentlichen nur aus einer Kunststoffmatrix bestehen,
wobei
a) die mindestens eine Speiche (2, 3) Verstärkungsstrukturen (23, 33) aufweist, und
b) der Nabenkörper (4) eine einen Innenbereich ausbildende hohlraumartige Form aufweist, wobei im Innenbereich des Nabenkörpers (4) Verstärkungsstrukturen (43) angeordnet sind.

16. Lenkrad nach Anspruch 15, **dadurch gekennzeichnet, dass** der Lenkradkranz (1) eine geschlossene Oberfläche aufweist, die einen Hohlraum ohne Verstärkungsstrukturen vollständig umgibt.

17. Lenkrad nach Anspruch 15, **dadurch gekennzeichnet, dass** der Lenkradkranz (1) Verstärkungsstrukturen (13) aufweist.

18. Lenkrad nach einem der Ansprüche 15 bis 17, **dadurch gekennzeichnet, dass** die Verstärkungsstrukturen (13, 23, 33) eine rippenartige Gestalt aufweisen.

19. Lenkrad nach einem der Ansprüche 15 bis 18, **dadurch gekennzeichnet, dass** die Verstärkungsstrukturen (13, 23, 33, 43) entlang der Lastpfade im Lenkrad angeordnet sind.

20. Lenkrad nach einem der Ansprüche 15 bis 18, **dadurch gekennzeichnet, dass** die Verstärkungsstrukturen des Lenkradkranzes (1) und/oder der mindestens einen Speiche (2, 3) sich teilweise kreuzend ausgebildet sind.

21. Lenkrad nach einem der Ansprüche 15 bis 20, **dadurch gekennzeichnet, dass** der Lenkradkranz (1) und/oder die mindestens eine Speiche (2, 3) eine aus einem ersten Seitenschenkel (10, 20, 30), einem dem ersten Seitenschenkel (10, 20, 30) gegenüberliegenden zweiten Seitenschenkel (11, 21, 31) und einem Mittelschenkel (12, 22, 32), der den ersten Seitenschenkel (10, 20, 30) mit dem zweiten Seitenschenkel (11, 21, 31) verbindet, gebildete Aufnahme (15, 25, 35) aufweisen.

22. Lenkrad nach Anspruch 21, **dadurch gekennzeichnet, dass** innerhalb der Aufnahme (15, 25, 35) zumindest ein Teil der Verstärkungsstrukturen (13, 23, 33) des Lenkradkranzes (1) und/oder der mindestens einen Speiche (2, 3) angeordnet ist.

23. Lenkrad nach einem der Ansprüche 21 bis 22, **dadurch gekennzeichnet, dass** die Aufnahme (15, 25, 35) des Lenkradkranzes (1) und/oder der mindestens einen Speiche (2, 3) eine geschlossene Oberfläche aufweist.

24. Lenkrad nach einem der Ansprüche 21 bis 23, **dadurch gekennzeichnet, dass** die Aufnahme (15, 25, 35) des Lenkradkranzes (1) und/oder der mindestens einen Speiche (2, 3) eine im Querschnitt U-artige Form aufweist.

25. Lenkrad nach einem der Ansprüche 21 bis 24, **dadurch gekennzeichnet, dass** die Verstärkungsstrukturen (23, 33) im Bereich der mindestens einen Speiche (2, 3) zumindest teilweise schräg vom ersten Seitenschenkel (20) der Aufnahme (25, 35) zum zweiten Seitenschenkel (21, 31) der Aufnahme (25, 35) verlaufen.

26. Lenkrad nach einem der Ansprüche 21 bis 25, **dadurch gekennzeichnet, dass** die Verstärkungsstrukturen (23, 33) im Bereich der mindestens einen Speiche (2, 3) im Wesentlichen längs und quer zu den Seitenschenkeln (20, 21; 30, 31) der Aufnahme (25, 35) verlaufen.

27. Lenkrad nach einem der Ansprüche 21 bis 26, **dadurch gekennzeichnet, dass** die Verstärkungsstrukturen (13) im Bereich des Lenkradkranzes (1) zumindest abschnittsweise schräg vom ersten Seitenschenkel (10) der Aufnahme (15) zum zweiten Seitenschenkel (11) der Aufnahme (15) und/oder parallel zu den beiden Seitenschenkeln (10, 11) der Aufnahme (15) und/oder quer zu den beiden Seitenschenkeln (10, 11) der Aufnahme (15) angeordnet sind.

28. Lenkrad nach einem der Ansprüche 15 bis 27, **dadurch gekennzeichnet, dass** der Nabenkörper (4) einen Nabeneinsatz (5) aufweist, der zumindest teilweise in die Kunststoffmatrix eingebettet ist.

29. Lenkrad nach Anspruch 28, **dadurch gekennzeichnet, dass** der Nabeneinsatz (5) mindestens ein Metall aufweist.

30. Lenkrad nach Anspruch 28 oder 29, **dadurch gekennzeichnet, dass** der Nabeneinsatz (5) mindestens eine Aussparung (52) aufweist, so dass er weniger als die gesamte Grundfläche des Nabenkörpers (4) ausfüllt.

31. Lenkrad nach einem der Ansprüche 28 bis 30, **dadurch gekennzeichnet, dass** der Nabeneinsatz (5) mindestens einen ersten Durchbruch (50) zur Aufnahme einer Lenkstange aufweist, der nicht in die Kunststoffmatrix eingebettet ist.

32. Lenkrad nach Anspruch 31, **dadurch gekennzeichnet, dass** die Verstärkungsstrukturen (43) des Nabenkörpers (4) zumindest teilweise ringförmig um den ersten Durchbruch (42, 50) angeordnet sind.

33. Lenkrad nach Anspruch 31 oder 32, **dadurch gekennzeichnet, dass** die Verstärkungsstrukturen (43) des Nabenkörpers (4) zumindest teilweise axial auf den ersten Durchbruch (42, 50) zulaufend angeordnet sind.

34. Lenkrad nach einem der Ansprüche 31 bis 33, **dadurch gekennzeichnet, dass** die Verstärkungsstrukturen (43) an den Seitenflächen des Nabenkörpers (4) im Wesentlichen in der Längserstreckungsrichtung der in den ersten Durchbruch (42, 50) einzuführenden Lenkstange verlaufen.

35. Lenkrad nach einem der Ansprüche 29 bis 34, **dadurch gekennzeichnet, dass** der Nabeneinsatz (5) mindestens einen zweiten Durchbruch (51) aufweist, der werkstoffschlüssig in die Kunststoffmatrix eingebettet ist.

36. Lenkrad nach einem der Ansprüche 28 bis 35, **dadurch gekennzeichnet, dass** um jede Öffnung (41, 42, 44) in der Nabenkörpergrundfläche (40), welche vom Nabeneinsatz (5) und der diesen einbettenden Kunststoffmatrix gebildet wird, eine Verstärkungsstruktur (43) umlaufend angeordnet ist.

37. Lenkrad nach einem der Ansprüche 28 bis 36, **dadurch gekennzeichnet, dass** das Verhältnis zwischen der Materialstärke des Nabeneinsatzes (5) und der Materialstärke der Nabenkörpergrundfläche (40), welche vom Nabeneinsatz (5) und der diesen einbettenden Kunststoffmatrix gebildet wird, im Bereich von 5:1 bis 1:5, insbesondere bei 1:2,5, liegt.

38. Lenkrad nach einem der Ansprüche 15 bis 37, **dadurch gekennzeichnet, dass** die Kunststoffmatrix einen Anteil von 5 bis 80 %, insbesondere 10 bis 70 %, besonders 20 bis 60 % eines Fasermaterials aufweist.

39. Lenkrad nach Anspruch 38, **dadurch gekennzeichnet, dass** das Fasermaterial Carbonfasern, Metallfasern, Fasern organischer Produkte und/oder Glasfasern aufweist.

40. Lenkrad nach Anspruch 39, **dadurch gekennzeichnet, dass** mindestens 50 % der Glasfasern in der Kunststoffmatrix des Lenkradskeletts eine Länge von mindestens 1 mm, insbesondere von 1 bis 20 mm, ganz besonders von 1 bis 5 mm aufweisen.

41. Lenkrad nach einem der Ansprüche 15 bis 40, **dadurch gekennzeichnet, dass** der Überzug eine Stärke von 1 bis 5 mm, insbesondere 1 bis 3 mm und besonders 1 bis 2 mm aufweist.

42. Lenkrad nach einem der Ansprüche 15 bis 41, **dadurch gekennzeichnet, dass** der Überzug aus einem Material gefertigt ist, das eine geringere Härte als das Material des Lenkradskeletts aufweist.

43. Lenkrad nach einem der Ansprüche 15 bis 42, **dadurch gekennzeichnet, dass** der Überzug einen Leder- und/oder Textilwerkstoff, einen Softlack und/oder einen gespritzten und/oder geschäumten Thermoplasten und/oder Duroplasten aufweist.

44. Lenkrad nach einem der Ansprüche 15 bis 43, **dadurch gekennzeichnet, dass** zwischen dem Lenkradskelett und dem Überzug eine Schicht aus einem elastischen Material, insbesondere aus Weichschaumstoff, angeordnet ist.

## Claims

1. Method for producing a steering wheel for a vehicle, in particular for a motor vehicle, having the following steps:
a) producing a steering wheel frame with a hub base (4), a steering wheel rim (1) and at least one spoke (2, 3) by
aa) providing a hub insert (5),
ab) injection-moulding a plastics matrix around the hub insert (5) for forming the hub base (4), the hub base (4) having a cavity-like shape forming an internal region and reinforcing structures (43) being arranged in the internal region of the hub base (4),
ac) injection-moulding and/or gas-assisted injection-moulding and/or water injection-moulding of the at least one spoke (2, 3) and of the steering wheel rim (1) from the plastics matrix, the at least one spoke (2, 3) connecting the hub base (4) to the steering wheel rim (1),
b) at least partial covering of the steering wheel frame with a cover.

2. Method according to Claim 1, **characterized in that** the hub base (4) is painted between step a) and step b).

3. Method according to Claim 1 or 2, **characterized in that** before step b) a layer of a resilient material is applied to the steering wheel frame.

4. Method according to one of the preceding claims, **characterized in that** the plastics matrix has at least one thermoplastic plastic.

5. Method according to one of the preceding claims, **characterized in that** the thermoplastic plastic is polypropylene, polybutylene terephthalate or a polyamide.

6. Method according to one of the preceding claims, **characterized in that** the plastics matrix has a component of 5 to 80%, in particular 10 to 70%, particularly 20 to 60% of a fibre material.

7. Method according to Claim 6, **characterized in that** the fibre material has carbon fibres, metal fibres, fibres of organic products and/or glass fibres.

8. Method according to Claim 7, **characterized in that** the glass fibres have a diameter of 1 to 60 µm, in particular of 3 to 40 µm, particularly of 5 to 20 µm.

9. Method according to Claim 7 or 8, **characterized in that** the injection-moulding is carried out such that at least 50% of the glass fibres in the plastics matrix of the steering wheel frame have a length of at least 1 mm, in particular of 1 to 20 mm, quite particularly of 1 to 5 mm.

10. Method according to one of the preceding claims, **characterized in that** for the injection-moulding an extrusion device is used, which has at least one supply device for supplying the plastics matrix and/or a plastics matrix component and a conveyor worm for conveying the plastics matrix and/or the plastics matrix component, the regions, which are flowed through by the plastics matrix to be melted and/or by the melted plastics matrix, having cross sections which are selected to be sufficiently large that degradation to the fibre material in the plastics matrix is minimized.

11. Method according to Claim 10, **characterized in that** a fibre-free plastics matrix component and the fibre material are supplied to the extrusion device separately from one another, the fibre material being introduced into the already melted fibre-free plastics matrix component.

12. Method according to one of the preceding claims, **characterized in that** the steering wheel frame is covered with the cover without carrying out a washing step.

13. Method according to one of the preceding claims, **characterized in that** the covering of the steering wheel frame with the cover takes place by injection-moulding, by a reaction method and/or by a manual mechanical method.

14. Method according to one of the preceding claims, **characterized in that** the cover has a leather and/or textile material, a softpaint and/or injection-moulded and/or foamed thermoplastics and/or thermosetting plastics.

15. Steering wheel for a vehicle, in particular for a motor vehicle, with a steering wheel frame, which has a steering wheel rim (1), a hub base (4) and at least one spoke (2, 3), by means of which the hub base (4) is connected to the steering wheel rim (1), the hub base (4) being arranged inside the steering wheel rim (1) and the steering wheel rim (1) and the at least one spoke (2,3) substantially only consisting of a plastics matrix,
a) the at least one spoke (2, 3) having reinforcing structures (23, 33) and
b) the hub base (4) having a cavity-like shape forming an internal region, reinforcing structures (43) being arranged in the internal region of the hub base (4).

16. Steering wheel according to Claim 15, **characterized in that** the steering wheel rim (1) has an enclosed surface which completely surrounds a cavity without reinforcing structures.

17. Steering wheel according to Claim 15, **characterized in that** the steering wheel rim (1) has reinforcing structures (13).

18. Steering wheel according to one of Claims 15 to 17, **characterized in that** the reinforcing structures (13, 23, 33) have a rib-like design.

19. Steering wheel according to one of Claims 15 to 18, **characterized in that** the reinforcing structures (13, 23, 33, 43) are arranged along the load transfer paths in the steering wheel.

20. Steering wheel according to one of Claims 15 to 18, **characterized in that** the reinforcing structures of the steering wheel rim (1) and/or the at least one spoke (2, 3) are configured partially crossed.

21. Steering wheel according to one of Claims 15 to 20, **characterized in that** the steering wheel rim (1) and/or the at least one spoke (2, 3) have a receiver (15, 25, 35) formed by a first side limb (10, 20, 30), a second side limb (11, 21, 31) opposing the first side limb (10, 20, 30) and a central limb (12, 22, 32) which connects the first side limb (10, 20, 30) to the second side limb (11, 21, 31).

22. Steering wheel according to Claim 21, **characterized in that** at least one portion of the reinforcing structures (13, 23, 33) of the steering wheel rim (1) and/or the at least one spoke (2, 3) is arranged inside the receiver (15, 25, 35).

23. Steering wheel according to one of Claims 21 to 22, **characterized in that** the receiver (15, 25, 35) of the steering wheel rim (1) and/or the at least one spoke (2, 3) has an enclosed surface.

24. Steering wheel according to one of Claims 21 to 23, **characterized in that** the receiver (15, 25, 35) of the steering wheel rim (1) and/or the at least one spoke (2, 3) has a U-shaped form in cross section.

25. Steering wheel according to one of Claims 21 to 24, **characterized in that** the reinforcing structures (23, 33) in the region of the at least one spoke (2, 3) extend at least partially obliquely from the first side limb (20) of the receiver (25, 35) to the second side limb (21, 31) of the receiver (25, 35).

26. Steering wheel according to one of Claims 21 to 25, **characterized in that** the reinforcing structures (23, 33) extend in the region of the at least one spoke (2, 3) substantially longitudinally and transversely to the side limbs (20, 21; 30, 31) of the receiver (25, 35).

27. Steering wheel according to one of Claims 21 to 26, **characterized in that** the reinforcing structures (13) are arranged in the region of the steering wheel rim (1) at least partially obliquely from the first side limb (10) of the receiver (15) to the second side limb (11) of the receiver (15) and/or parallel to the two side limbs (10, 11) of the receiver (15) and/or transversely to the two side limbs (10, 11) of the receiver (15).

28. Steering wheel according to one of Claims 15 to 27, **characterized in that** the hub base (4) has a hub insert (5) which is at least partially embedded in the plastics matrix.

29. Steering wheel according to Claim 28, **characterized in that** the hub insert (5) comprises at least one metal.

30. Steering wheel according to Claim 28 or 29, **characterized in that** the hub insert (5) has at least one recess (52) so that it fills up less than the entire bottom surface of the hub base (4).

31. Steering wheel according to one of Claims 28 to 30, **characterized in that** the hub insert (5) has at least one first through-passage (50) for receiving a steering shaft, which is not embedded in the plastics matrix.

32. Steering wheel according to Claim 31, **characterized in that** the reinforcing structures (43) of the hub base (4) are at least partially arranged in an annular manner around the first through-passage (42, 50).

33. Steering wheel according to Claim 31 or 32, **characterized in that** the reinforcing structures (43) of the hub base (4) are arranged extending at least partially axially toward the first through-passage (42, 50).

34. Steering wheel according to one of Claims 31 to 33, **characterized in that** the reinforcing structures (43) extend on the side faces of the hub base (4) substantially in the longitudinal direction of extension of the steering shaft to be inserted into the first through-passage (42, 50).

35. Steering wheel according to one of Claims 29 to 34, in that the hub insert (5) has at least one second through-passage (51) which is embedded non-positively in the plastics matrix.

36. Steering wheel according to one of Claims 28 to 35, **characterized in that** a reinforcing structure (43) is arranged surrounding each opening (41, 42, 44) in the bottom surface of the hub base (40) which is formed by the hub insert (5) and the plastics matrix embedding said hub insert.

37. Steering wheel according to one of Claims 28 to 36, **characterized in that** the ratio between the material thickness of the hub insert (5) and the material thickness of the bottom surface of the hub base (40), which is formed by the hub insert (5) and the plastics matrix embedding said hub insert, is in the range of 5:1 to 1:5, in particular 1:2.5.

38. Steering wheel according to one of Claims 15 to 37, **characterized in that** the plastics matrix has a component of 5 to 80%, in particular 10 to 70%, particularly 20 to 60% of a fibre material.

39. Steering wheel according to Claim 38, **characterized in that** the fibre material has carbon fibres, metal fibres, fibres of organic products and/or glass fibres.

40. Steering wheel according to Claim 39, **characterized in that** at least 50% of the glass fibres in the plastics matrix of the steering wheel frame have a length of at least 1 mm, in particular of 1 to 20 mm, quite particularly of 1 to 5 mm.

41. Steering wheel according to one of Claims 15 to 40, **characterized in that** the cover has a thickness of 1 to 5 mm, in particular 1 to 3 mm and particularly 1 to 2 mm.

42. Steering wheel according to one of Claims 15 to 41, **characterized in that** the cover is made of a material which has a lower hardness than the material of the steering wheel frame.

43. Steering wheel according to one of Claims 15 to 42, **characterized in that** the cover has a leather and/or textile material, a softpaint and/or injection-moulded and/or foamed thermoplastics and/or thermosetting plastics.

44. Steering wheel according to one of Claims 15 to 43, **characterized in that** a layer made of a resilient material, in particular made of flexible foam, is arranged between the steering wheel frame and the cover.

## Revendications

1. Procédé pour la fabrication d'un volant de direction pour un véhicule, en particulier pour un véhicule automobile, comprenant les étapes suivantes :
a) on fabrique une ossature de volant avec un corps de moyeu (4), une couronne de volant (1) et au moins un rayon (2, 3), en
aa) fournissant un insert de moyeu (5),
ab) injectant sous pression une matrice de matière plastique autour de l'insert de moyeu (5) pour former le corps de moyeu (4), ledit corps de moyeu (4) présentant une forme analogue à une cavité qui constitue une zone intérieure, et des structures de renforcement (43) sont agencées dans la zone intérieure du corps de moyeu (4),
ac) injectant sous pression et/ou un en injectant sous une pression intérieure de gaz ou d'eau, ledit au moins un rayon (2, 3) et la couronne de volant (1) à partir de la matrice de matière plastique, ledit au moins un rayon (2, 3) reliant le corps de moyeu (4) à la couronne de volant (1),
b) on recouvre au moins partiellement l'ossature de volant avec un recouvrement.

2. Procédé selon la revendication 1, **caractérisé en ce que** le corps de moyeu (4) est laqué entre l'étape a) et l'étape b).

3. Procédé selon la revendication 1 ou 2, **caractérisé en ce que**, avant l'étape b), on applique une couche de matériau élastique sur l'ossature de volant.

4. Procédé selon l'une des revendications précédentes, **caractérisé en ce que** la matrice de matière plastique comprend au moins une matière thermoplastique.

5. Procédé selon l'une des revendications précédentes, **caractérisé en ce que** la matière thermoplastique est du polypropylène, du polybutylène téréphtalate ou un polyamide.

6. Procédé selon l'une des revendications précédentes, **caractérisé en ce que** la matrice de matière plastique comprend une proportion de 5 à 80 %, en particulier 10 à 70 %, particulièrement 20 à 60 % d'un matériau en fibres.

7. Procédé selon la revendication 6, **caractérisé en ce que** le matériau en fibres comprend des fibres de carbone, des fibres de métal, des fibres de produits organiques et/ou des fibres de verre.

8. Procédé selon la revendication 7, **caractérisé en ce que** les fibres de verre présentent un diamètre de 1 à 60 µm, en particulier de 3 à 40 µm, et particulièrement de 5 à 20 µm.

9. Procédé selon la revendication 7 ou 8, **caractérisé en ce que** l'injection sous pression est mise en oeuvre de telle manière qu'au moins 50 % des fibres de verre dans la matrice de matière plastique de l'ossature de volant présentent une longueur d'au moins 1 mm, en particulier de 1 à 20 mm, et tout particulièrement de 1 à 5 mm.

10. Procédé selon l'une des revendications précédentes, **caractérisé en ce que** pour l'injection sous pression, on utilise un appareil d'extrusion qui comprend au moins un dispositif d'alimentation pour alimenter la matrice en matière plastique et/ou une proportion de matrice en matière plastique, et une vis d'Archimède pour refouler la matrice en matière plastique et/ou la proportion de matrice en matière plastique, dans lequel les zones traversées par la matrice en matière plastique à mettre en fusion et/ou par la matrice en matière plastique en fusion présentent des sections choisies aussi élevées qu'une dégradation du matériau en fibres dans la matrice en matière plastique est minimisée.

11. Procédé selon la revendication 10, **caractérisé en ce qu'**une proportion de matrice en matière plastique dépourvue de fibres et le matériau en fibres sont alimentés séparément l'un de l'autre à l'appareil d'extrusion, et le matériau en fibres est introduit dans la proportion de matrice en matière plastique dépourvue de fibres déjà en fusion.

12. Procédé selon l'une des revendications précédentes, **caractérisé en ce que** l'ossature de volant est recouverte avec le recouvrement sans exécuter une opération de lavage.

13. Procédé selon l'une des revendications précédentes, **caractérisé en ce que** le recouvrement de l'ossature de volant avec le recouvrement a lieu par injection sous pression, par un procédé de réaction et/ou par un procédé mécanique manuel.

14. Procédé selon l'une des revendications précédentes, **caractérisé en ce que** le recouvrement comprend un matériau à base de cuir et/ou de textile, une laque souple et/ou une matière thermoplastique et/ou une matière thermodurcissable injectée et/ou moussée.

15. Volant de direction pour un véhicule, en particulier pour un véhicule automobile, comprenant une ossature de volant, qui comprend une couronne de volant (1), un corps de moyeu (4) et au moins un rayon (2, 3), au moyen duquel le corps de moyeu (4) est relié à la couronne de volant (1), dans lequel le corps de moyeu (4) est agencé à l'intérieur de la couronne de volant (1), et la couronne de volant (1) et ledit au moins un rayon (2, 3) sont constitués sensiblement d'une seule matrice en matière plastique, dans lequel
a) ledit au moins un rayon (2, 3) comprend des structures de renforcement (23, 33), et
b) le corps de moyeu (4) présente une forme analogue à une cavité qui réalise une zone intérieure, et des structures de renforcement (43) sont agencées dans la zone intérieure du corps de moyeu (4).

16. Volant de direction selon la revendication 15, **caractérisé en ce que** la couronne de volant (1) comporte une surface fermée, qui entoure entièrement une cavité sans structure de renforcement.

17. Volant de direction selon la revendication 15, **caractérisé en ce que** la couronne de volant (1) comprend des structures de renforcement (13).

18. Volant de direction selon l'une des revendications 15 à 17, **caractérisé en ce que** les structures de renforcement (13, 23, 33) présentent une conformation en forme de nervures.

19. Volant de direction selon l'une des revendications 15 à 18, **caractérisé en ce que** les structures de renforcement (13, 23, 33, 43) sont agencées le long des trajets des charges dans le volant de direction.

20. Volant de direction selon l'une des revendications 15 à 18, **caractérisé en ce que** les structures de renforcement de la couronne de volant (1) et/ou dudit au moins un rayon (2, 3) sont réalisées de manière à se croiser partiellement.

21. Volant de direction selon l'une des revendications 15 à 20, **caractérisé en ce que** la couronne de volant (1) et/ou ledit au moins un rayon (2, 3) présente un logement (15, 25, 35) formé par une première branche latérale (10, 20, 30), par une deuxième branche latérale (11, 21, 31) opposée à la première branche latérale (10, 20, 30), et par une branche médiane (12, 22, 32) qui relie la première branche latérale (10, 20, 30) à la deuxième branche latérale (11, 21, 31).

22. Volant de direction selon la revendication 21, **caractérisé en ce qu'**au moins une partie des structures de renforcement (13, 23, 33) de la couronne de volant (1) et/ou dudit au moins un rayon (2, 3) est agencée à l'intérieur du logement (15, 25, 35).

23. Volant de direction selon l'une des revendications 21 et 22, **caractérisé en ce que** le logement (15, 25, 35) de la couronne de volant (1) et ledit au moins un rayon (2, 3) présentent une surface fermée.

24. Volant de direction selon l'une des revendications 21 à 23, **caractérisé en ce que** le logement (15, 25, 35) de la couronne de volant (1) et/ou dudit au moins un rayon (2, 3) présente une forme en section semblable à un U.

25. Volant de direction selon l'une des revendications 21 à 24, **caractérisé en ce que** les structures de renforcement (23, 33) s'étendent, dans la région dudit au moins un rayon (2, 3), au moins partiellement en oblique depuis la première branche latérale (20) du logement (25, 35) vers la deuxième branche latérale (21, 31) du logement (25, 35).

26. Volant de direction selon l'une des revendications 21 à 25, **caractérisé en ce que** les structures de renforcement (23, 33) s'étendent, dans la région dudit au moins un rayon (2, 3), sensiblement en longueur et transversalement aux branches latérales (20, 21 ; 30, 31) du logement (25, 35).

27. Volant de direction selon l'une des revendications 21 à 26, **caractérisé en ce que** les structures de renforcement (13) sont agencées, dans la région de la couronne de volant (1), au moins par tronçons en oblique depuis la première branche latérale (10) du logement (15) vers la deuxième branche latérale (11) du logement (15) et/ou parallèlement aux deux branches latérales (10, 11) du logement (15) et/ou transversalement aux deux branches latérales (10, 11) du logement (15).

28. Volant de direction selon l'une des revendications 15 à 27, **caractérisé en ce que** le corps de moyeu (4) comprend un insert de moyeu (5) qui est noyé au moins partiellement dans la matrice en matière plastique.

29. Volant de direction selon la revendication 28, **caractérisé en ce que** l'insert de moyeu (5) comprend au moins un métal.

30. Volant de direction selon la revendication 28 ou 29, **caractérisé en ce que** l'insert de moyeu (5) présente au moins une échancrure (52), de sorte qu'il remplit moins de la surface de base totale du corps de moyeu (4).

31. Volant de direction selon l'une des revendications 28 à 30, **caractérisé en ce que** l'insert de moyeu (5) comporte au moins une première traversée (50) pour recevoir une bielle de direction, qui n'est pas noyée dans la matrice en matière plastique.

32. Volant de direction selon la revendication 31, **caractérisé en ce que** les structures de renforcement (43) du corps de moyeu (4) sont agencées au moins partiellement en forme d'anneau autour de la première traversée (42, 50).

33. Volant de direction selon la revendication 31 ou 32, **caractérisé en ce que** les structures de renforcement (43) du corps de moyeu (4) sont agencées de manière à converger au moins partiellement axialement vers la première traversée (42, 50).

34. Volant de direction selon l'une des revendications 31 à 33, **caractérisé en ce que** les structures de renforcement (43) s'étendent, au niveau des surfaces latérales du corps de moyeu (4), sensiblement dans la direction d'extension longitudinale de la bielle de direction à introduire dans la première traversée (42, 50).

35. Volant de direction selon l'une des revendications 29 à 34, **caractérisé en ce que** l'insert de moyeu (5) présente au moins une deuxième traversée (51), laquelle est noyée par coopération de matière dans la matrice en matière plastique.

36. Volant de direction selon l'une des revendications 28 à 35, **caractérisé en ce qu'**autour de chaque ouverture (41, 42, 44) dans la surface de base (40) du corps de moyeu, formé par l'insert de moyeu (5) et par la matrice en matière plastique dans laquelle celui-ci est noyé, est agencée une structure de renforcement (43) de manière circonférentielle.

37. Volant de direction selon l'une des revendications 28 à 36, **caractérisé en ce que** la relation entre l'épaisseur du matériau de l'insert de moyeu (5) et l'épaisseur du matériau de la surface de base (40) du corps de moyeu, formé par l'insert de moyeu (5) et par la matrice en matière plastique dans laquelle celui-ci est noyé, est située dans la plage de 5:1 à 1:5, en particulier environ 1:2,5.

38. Volant de direction selon l'une des revendications 15 à 37, **caractérisé en ce que** la matrice en matière plastique comprend une proportion de 5 à 80 %, en particulier 10 à 70 %, particulièrement 20 à 60 % d'un matériau en fibres.

39. Volant de direction selon la revendication 38, **caractérisé en ce que** le matériau en fibres comprend des fibres de carbone, des fibres de métal, des fibres de produits organiques et/ou des fibres de verre.

40. Volant de direction selon la revendication 39, **caractérisé en ce qu'**au moins 50 % des fibres de verre dans la matrice en matière plastique de l'ossature de volant présent une longueur d'au moins 1 mm, en particulier de 1 à 20 mm, et tout particulièrement de 1 à 5 mm.

41. Volant de direction selon l'une des revendications 15 à 40, **caractérisé en ce que** le recouvrement présente une épaisseur de 1 à 5 mm, en particulier 1 à 3 mm, et particulièrement 1 à 2 mm.

42. Volant de direction selon l'une des revendications 15 à 41, **caractérisé en ce que** le recouvrement est produit en un matériau qui présente une dureté plus faible à celle du matériau de l'ossature de volant.

43. Volant de direction selon l'une des revendications 15 à 42, **caractérisé en ce que** le recouvrement comprend un matériau à base de cuir et/ou de textile, une laque souple et/ou une matière thermoplastique et/ou une matière thermodurcissable injectée et/ou moussée.

44. Volant de direction selon l'une des revendications 15 à 43, **caractérisé en ce qu'**une couche d'un matériau élastique, en particulier en mousse souple, est agencée entre l'ossature de volant et le recouvrement.
